# EUROPEAN PATENT APPLICATION

(11) **EP 4 836 237 A1**
(43) Date of publication of application: **04.11.2026**
(21) Application number: 25744444.8
(22) Date of filing: 07.01.2025
(51) Int. Cl.: H02J 50/20

(54) **WIRELESS ENERGY TRANSFER METHOD AND APPARATUS**

(30) Priority: 26.01.2024 CN 202410112416
(71) Applicant: Huawei Technologies Co., Ltd., Shenzhen, Guangdong 518129 (CN)
(72) Inventor: LI, Ying, Shenzhen, Guangdong 518129 (CN); HUANG, Lei, Shenzhen, Guangdong 518129 (CN); ZHU, Qian, Shenzhen, Guangdong 518129 (CN); QIAN, Bin, Shenzhen, Guangdong 518129 (CN)
(74) Representative: Huawei European IPR
(86) International application number: PCT/CN2025/071117
(87) International publication number: WO 2025/157000

(57) **Abstract**

A wireless power transfer method and an apparatus are applied to the field of communication technologies. This application may be applied to the AMP field, such as supporting WPT, WLAN, or IEEE series protocols, for example, a protocol related to AMP in IEEE 802.11, or another protocol in the IEEE 802.11 series, for example, the 802.11a/b/g protocol, the 802.11n protocol, the 802.1 1ac protocol, the 802.11ax protocol, the 802.11be protocol, or the 802.11bn protocol. The method includes: A first AMP apparatus sends first capability indication information through a WLAN link, and then initiates a WPT setup procedure based on the first capability indication information; and a third AMP apparatus receives the first capability indication information, and responds to the WPT setup procedure. An interaction procedure between the AMP apparatuses is improved, enhancing communication efficiency.

## Description

This application claims priority to Chinese Patent Application No. 202410112416.6, filed with the China National Intellectual Property Administration on January 26, 2024 and entitled "WIRELESS POWER TRANSFER METHOD AND APPARATUS", which is incorporated herein by reference in its entirety.

### TECHNICAL FIELD

This application relates to the field of communication technologies, and in particular, to a wireless power transfer method and an apparatus.

### BACKGROUND

Currently, wireless local area network (wireless local area network, WLAN) applications based on the institute of electrical and electronics engineers (institute of electrical and electronics engineers, IEEE) 802.11 technology have been deployed in many market segments, including a conventional consumer electronics market and a booming internet of things market. However, conventional internet of things devices are usually driven by batteries with limited service life, which leads to the following issues for the internet of things devices: (1) inability to operate in harsh communication environments (such as high temperature, extremely low temperature, high humidity, high pressure, high radiation, or high-speed movement environments); (2) inability to achieve extreme miniaturization of a terminal size; (3) inability to achieve extremely low terminal costs; (4) existence of labor maintenance costs such as battery replacement; (5) low recycling rates, leading to damage to the Earth's ecosystem; and (6) existence of safety hazards.

To further reduce deployment and operation and maintenance costs of the Wi-Fi internet of things, the IEEE 802.11 working group is discussing an internet of things device that supports an energy harvesting capability. The new project is named ambient power (ambient power, AMP). Introducing radio frequency wireless power transfer (radio frequency wireless power transfer, RF WPT) and using components that support RF WPT to replace conventional batteries to resolve bottleneck problems caused by the conventional batteries.

Therefore, an interaction manner between devices is a problem that is being studied by a person skilled in the art.

### SUMMARY

Embodiments of this application provide a wireless power transfer (wireless power transfer, WPT) method and an apparatus, to improve an interaction procedure between AMP apparatuses, so that a first AMP apparatus can implement RF energy harvesting.

According to a first aspect, an embodiment of this application provides a wireless power transfer method. The method is applied to a first ambient power AMP apparatus, and the AMP apparatus may include an AMP device, or a chip, a functional module, or the like that can be disposed in the AMP device. For example, the AMP apparatus may include an AMP station (station, STA), and the method includes:
sending first capability indication information through a wireless local area network (wireless local area network, WLAN) link, where the first capability indication information indicates capability information of receiving a wireless power transfer WPT signal by the first AMP apparatus; and initiating a WPT setup procedure based on the first capability indication information.

In this embodiment of this application, the first AMP apparatus sends the first capability indication information, so that a third AMP apparatus can learn, based on the first capability indication information, that the WPT setup procedure is accepted or the WPT setup procedure is rejected. Therefore, an interaction procedure between the AMP apparatuses is improved, so that the third AMP apparatus can properly determine, based on the first capability indication information, whether the WPT setup procedure is successful. Because a processing capability of the third AMP apparatus is stronger, accuracy of determining whether the WP setup procedure can be successfully set up can be further improved. In addition, because the first AMP apparatus serves as an end for requesting RF energy, initiating the WPT setup procedure through the first AMP apparatus can further enhance efficiency of providing RF energy by a second AMP apparatus for the first AMP apparatus, so that the second AMP apparatus can charge the first AMP apparatus in time.

In a possible implementation, the method further includes: receiving second capability indication information through the WLAN link, where the second capability indication information indicates capability information of sending the WPT signal by the second AMP apparatus.

In this embodiment of this application, the first AMP apparatus can simply determine, based on the first capability indication information and the second capability indication information, whether to initiate the WPT setup procedure, thereby enhancing efficiency of successfully setting up the WPT setup procedure. For example, the third AMP apparatus may determine, in detail based on the first capability indication information and the second capability indication information, whether the WPT setup procedure initiated by the first AMP apparatus can succeed, to further improve accuracy of determining whether the WPT setup procedure can be successfully set up, thereby enhancing efficiency of successfully setting up a WPT procedure.

In a possible implementation, the initiating the WPT setup procedure based on the first capability indication information includes: initiating the WPT setup procedure when the first capability indication information matches the second capability indication information.

In this embodiment of this application, when the first capability indication information matches the second capability indication information, the first AMP apparatus initiates the WPT setup procedure, thereby enhancing efficiency of determining the WPT setup procedure by the third AMP apparatus.

In a possible implementation, the first capability indication information includes at least one of the following: a frequency band supported by the first AMP apparatus, a bandwidth supported by the first AMP apparatus, a WPT waveform supported by the first AMP apparatus, a receive power sensitivity of the first AMP apparatus, a type of the first AMP apparatus, an antenna type of the first AMP apparatus, or an antenna polarization manner of the first AMP apparatus.

In a possible implementation, the first capability indication information includes at least one of the following: a frequency band supported by the first AMP apparatus, a bandwidth supported by the first AMP apparatus, or a WPT waveform supported by the first AMP apparatus.

In this embodiment of this application, when the frequency band supported by the first AMP apparatus is different from a frequency band supported by the second AMP apparatus, even if the second AMP apparatus sends a WPT signal to the first AMP apparatus, the first AMP apparatus cannot receive the WPT signal. Therefore, the first AMP apparatus indicates the frequency band supported by the first AMP apparatus, so that the third AMP apparatus can correctly determine whether the first AMP apparatus can successfully receive the WPT signal, thereby improving communication efficiency. When the channel bandwidth supported by the first AMP apparatus does not match a channel bandwidth supported by the second AMP apparatus, a power of the WPT signal received by the first AMP apparatus is unstable. Therefore, power stability of the WPT signal can be ensured by exchanging the channel bandwidth supported by the first AMP apparatus. When the WPT waveform supported by the first AMP apparatus is inconsistent with a WPT waveform supported by the second AMP apparatus, the first AMP apparatus cannot convert the received WPT signal into a direct current signal through a rectifier, and therefore the WPT signal cannot provide RF energy for the first AMP apparatus. Therefore, the first AMP apparatus indicates the foregoing capability, so that the third AMP apparatus can accurately and effectively determine whether to accept the WPT setup procedure.

In a possible implementation, the first capability indication information further includes at least one of the following: a receive power sensitivity of the first AMP apparatus or a type of the first AMP apparatus.

In this embodiment of this application, when the receive power sensitivity of the first AMP apparatus does not match a transmit power of the second AMP apparatus, for example, the second AMP apparatus transmits the WPT signal at a transmit power, and then a receive power of the WPT signal is lower than the receive power sensitivity of the first AMP apparatus when the WPT signal reaches the first AMP apparatus after signal attenuation, the first AMP apparatus cannot detect the WPT signal, and therefore RF energy cannot be provided for the first AMP apparatus.

In a possible implementation, the first capability indication information further includes at least one of the following: an antenna type of the first AMP apparatus or an antenna polarization manner of the first AMP apparatus.

In this embodiment of this application, different antenna types need different powers to send a same signal. Therefore, the first AMP apparatus can send the antenna type of the first AMP apparatus, and use the antenna type as a reference for capability information. When the antenna type of the first AMP apparatus does not match an antenna type of the second AMP apparatus, for example, the antenna type of the first AMP apparatus is circular polarization, and the antenna type of the second AMP apparatus is linear polarization, low transmission efficiency of the WPT signal is caused. Therefore, transmission efficiency of the WPT signal can be improved by exchanging the antenna polarization manner.

In a possible implementation, the second capability indication information includes at least one of the following: a frequency band supported by the second AMP apparatus, a bandwidth supported by the second AMP apparatus, a WPT waveform supported by the second AMP apparatus, whether an effective isotropic radiated power EIRP of the second AMP apparatus is adjustable, an EIRP of the second AMP apparatus, an antenna type of the second AMP apparatus, an antenna polarization manner of the second AMP apparatus, an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

In a possible implementation, the second capability indication information includes at least one of the following: a frequency band supported by the second AMP apparatus, a bandwidth supported by the second AMP apparatus, or a WPT waveform supported by the second AMP apparatus.

In a possible implementation, the second capability indication information further includes at least one of the following: whether an effective isotropic radiated power EIRP of the second AMP apparatus is adjustable or an EIRP of the second AMP apparatus.

In a possible implementation, the second capability indication information further includes at least one of the following: an antenna type of the second AMP apparatus or an antenna polarization manner of the second AMP apparatus.

In a possible implementation, the second capability indication information further includes at least one of the following: an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

In this embodiment of this application, the second AMP apparatus indicates an antenna orientation, an antenna elevation, a bandwidth of an antenna beam, or a height of an antenna beam to the first AMP apparatus, so that the first AMP apparatus can learn of a radiation range of an antenna based on the information. Therefore, the first AMP apparatus can learn whether the first AMP apparatus is within a radiation range of the second AMP apparatus. If the first AMP apparatus is not within the radiation range, transmission efficiency is very low, and the first AMP apparatus may not initiate a WPT setup request.

In a possible implementation, the initiating the WPT setup procedure includes: sending a WPT setup request through the WLAN link, where the WPT setup request is used to request to initiate the WPT setup procedure, or the WPT setup request is used to request to set up a WPT link; and receiving a WPT setup response of the WPT setup request through the WLAN link.

For example, the WPT setup response may indicate whether the WPT link is successfully set up.

In this embodiment of this application, the first AMP apparatus sends the WPT setup request to request to set up a WPT link to the second AMP apparatus; the third AMP apparatus determines, based on the WPT setup request, whether the second AMP apparatus can set up the WPT link to the first AMP apparatus; and the third AMP apparatus sends the WPT setup response to notify the first AMP apparatus whether the WPT link is successfully set up. If the WPT link fails to be set up, it indicates that the second AMP apparatus cannot provide a wireless power for the first AMP apparatus. If the WPT link is successfully set up, it indicates that the second AMP apparatus can provide a wireless power (for example, send a WPT signal) to the first AMP apparatus. In this embodiment of this application, an interaction procedure for setting up the WPT link between different AMP apparatuses is improved, thereby improving reliability of wireless power transfer.

In a possible implementation, the method further includes: sending a WPT report, where the WPT report is used to report WPT status information of the first AMP apparatus.

In a possible implementation, the method further includes: before sending the WPT report, receiving a WPT report request, where the WPT report request requires the first AMP apparatus to report WPT status information.

In this embodiment of this application, the first AMP apparatus enters a WPT process, and may send the WPT report to the third AMP apparatus to report a WPT status; and the third AMP apparatus may determine, based on the WPT status information, whether the WPT process needs to be adjusted, thereby further improving reliability of wireless power transfer.

In this embodiment of this application, the third AMP apparatus enters the WPT process, and may send the WPT report request to the first AMP apparatus, to request to report the WPT status information. After receiving the WPT report request, the first AMP apparatus sends the WPT report to the third AMP apparatus, to report the WPT status information. With reference to the foregoing possible implementations, the first AMP apparatus may actively or passively report the WPT status information, thereby improving an interaction procedure between different AMP apparatuses in the WPT process, and further improving reliability of wireless power transfer.

In a possible implementation, the method further includes: sending the WPT report when the first AMP apparatus generates a WPT alert or no longer needs a WPT signal, where the WPT report indicates that the first AMP apparatus generates a WPT alert or no longer needs a WPT signal.

In this embodiment of this application, when the first AMP apparatus finds that the first AMP apparatus generates a WPT alert or no longer needs a WPT signal, for example, the first AMP apparatus finds that a wireless power receiving module is about to be damaged or is fully charged, the first AMP apparatus may actively send the WPT report to the third AMP apparatus, and indicate, in the WPT report, that the WPT alert is generated or the WPT signal is no longer needed; and the third AMP apparatus stops a WPT process based on the WPT report. This is both an active WPT reporting manner and an implicit WPT stop process.

In a possible implementation, the method further includes: receiving WPT teardown, where the WPT teardown notifies the first AMP apparatus that a WPT process is to be stopped; and sending an ACK, where the ACK indicates that the first AMP apparatus successfully receives an indication of stopping the WPT process.

In this embodiment of this application, the third AMP apparatus sends the WPT teardown to the first AMP apparatus, to notify that the WPT process is to be stopped; and the first AMP apparatus feeds back the ACK, to notify that the indication of stopping the WPT process is successfully received. This is an explicit WPT stop process, which completes an interaction procedure between different AMP apparatuses in a WPT teardown phase together with the foregoing implicit WPT stop process, thereby further improving reliability of wireless power transfer.

In a possible implementation, the WPT setup request includes at least one of the following fields: a category field, a WPT action field, a WPT setup parameter field, and a WPT status control field, where the category field indicates that a category of the WPT setup request is WPT category information, the WPT action field indicates that an action type corresponding to the WPT action field is the WPT setup request, the WPT setup parameter field indicates a parameter used for setting up a WPT link, and the WPT status control field indicates WPT status information to be reported in the WPT report.

In a possible implementation, the WPT setup parameter field includes at least one of the following fields: a WPT frequency range field, a WPT modulation field, and a WPT duration field, where the WPT frequency range field indicates a frequency range used in the WPT process, the WPT modulation field indicates a modulation scheme used in the WPT process, and the WPT duration field indicates a time length for which the WPT process lasts.

In a possible implementation, the WPT status control field includes at least one of the following fields: whether to report a direct current voltage output by a rectifier of the first AMP apparatus, whether to report a voltage of an energy storage of the first AMP apparatus, whether to report a power received by the first AMP apparatus, and whether to report a temperature of the first AMP apparatus.

In this embodiment of this application, the first AMP apparatus sends the WPT setup request to the third AMP apparatus, to notify parameters related to WPT link setup, for example, a frequency range used in the WPT process, a modulation scheme used in the WPT process, and a time length for which the WPT process lasts, and may further notify whether the first AMP apparatus reports WPT status information in a report phase, for example, whether to report a voltage output by the rectifier, whether to report a voltage of the energy storage, whether to report a received power, and whether to report a temperature. The third AMP apparatus may determine, based on the WPT setup parameter field, whether the WPT link can be successfully set up, and may determine, based on the WPT status control field, the WPT status information to be reported by the first AMP apparatus in the report phase. This improves an interaction procedure of whether the first AMP apparatus and the second AMP apparatus can successfully set up the WPT link in a setup phase, and improves accuracy of determining whether the WPT link is successfully set up.

In a possible implementation, the WPT report includes at least one of the following fields: a category field, a WPT action field, a WPT power control field, a WPT status control field, and WPT status information, where the category field indicates that a category of the WPT report is WPT category information, the WPT action field indicates that an action type corresponding to the WPT action field is the WPT report, the WPT power control field indicates WPT power control information reported by the first AMP apparatus, the WPT status control field indicates WPT status information to be reported in the WPT report, and the WPT status information indicates WPT status information reported by the first AMP apparatus.

In a possible implementation, the WPT power control information includes at least one of the following information: urgency of power control information reported by the first AMP apparatus, a status of a power received by the first AMP apparatus, whether a voltage of the first AMP apparatus is excessively high, whether a current of the first AMP apparatus is excessively high, whether a temperature of the first AMP apparatus is excessively high, and whether the first AMP apparatus has a self-protection mechanism.

In a possible implementation, the WPT status control field includes at least one of the following fields: whether to report a direct current voltage output by a rectifier of the first AMP apparatus, whether to report a voltage of an energy storage of the first AMP apparatus, whether to report a power received by the first AMP apparatus, and whether to report a temperature of the first AMP apparatus.

In a possible implementation, the WPT status information includes at least one of the following information: a direct current voltage output by a rectifier of the first AMP apparatus, a voltage of an energy storage of the first AMP apparatus, a power received by the first AMP apparatus, and a temperature of the first AMP apparatus.

In this embodiment of this application, the first AMP apparatus sends the WPT report to the third AMP apparatus, so that the third AMP apparatus can learn of the WPT power control information, for example, whether capability control information of the WPT report is urgent; whether a power received by the first AMP apparatus reaches a minimum receive power or a maximum receive power; whether a voltage, a current, or a temperature of the first AMP apparatus is excessively high; or whether the first AMP apparatus has a self-protection mechanism. The third AMP apparatus can adjust a WPT transmit power based on the WPT power control information. The third AMP apparatus can further learn of the WPT status information, for example, a direct current voltage output by the rectifier of the first AMP apparatus, a voltage of the energy storage, a received power, or a temperature. The third AMP apparatus can determine, based on the WPT status information, whether to continue the WPT process. This improves an interaction procedure of information required for the third AMP apparatus to control the WPT process in the WPT process, and further improves reliability of wireless power transfer.

In a possible implementation, the status of the power received by the first AMP apparatus includes at least one of the following status information: the received power does not reach a minimum receive power threshold, the received power is between the minimum receive power threshold and a maximum receive power threshold, the received power reaches the maximum receive power threshold, the received power exceeds a first threshold of a maximum power, the received power exceeds a second threshold of the maximum power, the first AMP apparatus generates a WPT alert, and the first AMP apparatus no longer needs WPT.

In a possible implementation, the status of the power received by the first AMP apparatus further includes at least one of the following status information: the received power does not reach a minimum receive power threshold, the received power is between the minimum receive power threshold and a maximum receive power threshold, the received power reaches the maximum receive power threshold, the received power exceeds a first threshold of a maximum power, the received power exceeds a second threshold of the maximum power, the first AMP apparatus generates a WPT alert, and the first AMP apparatus no longer needs a WPT signal. This further improves accuracy of determining the WPT status information.

In this embodiment of this application, the third AMP apparatus can increase or decrease a WPT transmit power, or stop the WPT process based on the reported power status.

According to a second aspect, an embodiment of this application provides a wireless power transfer method. The method is applied to a third ambient power AMP apparatus, and the method includes:
receiving first capability indication information through a WLAN link, where the first capability indication information indicates capability information of receiving a wireless power transfer WPT signal by a first AMP apparatus; and responding to a WPT setup procedure based on the first capability indication information.

In a possible implementation, the method further includes: sending second capability indication information through the WLAN link, where the second capability indication information indicates capability information of sending the WPT signal by a second AMP apparatus.

In a possible implementation, the responding to the WPT setup procedure based on the first capability indication information includes: responding to the WPT setup procedure when the first capability indication information matches the second capability indication information.

In a possible implementation, the first capability indication information includes at least one of the following: a frequency band supported by the first AMP apparatus, a bandwidth supported by the first AMP apparatus, or a WPT waveform supported by the first AMP apparatus.

In a possible implementation, the first capability indication information further includes at least one of the following: a receive power sensitivity of the first AMP apparatus or a type of the first AMP apparatus.

In a possible implementation, the first capability indication information further includes at least one of the following: an antenna type of the first AMP apparatus or an antenna polarization manner of the first AMP apparatus.

In a possible implementation, the second capability indication information includes at least one of the following: a frequency band supported by the second AMP apparatus, a bandwidth supported by the second AMP apparatus, or a WPT waveform supported by the second AMP apparatus.

In a possible implementation, the second capability indication information further includes at least one of the following: whether an effective isotropic radiated power EIRP of the second AMP apparatus is adjustable or an EIRP of the second AMP apparatus.

In a possible implementation, the second capability indication information further includes at least one of the following: an antenna type of the second AMP apparatus or an antenna polarization manner of the second AMP apparatus.

In a possible implementation, the second capability indication information further includes at least one of the following: an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

In a possible implementation, the responding to the WPT setup procedure includes: receiving a WPT setup request through the WLAN link, where the WPT setup request is used to request to initiate a WPT setup procedure, or the WPT setup request is used to request to set up a WPT link; and sending a WPT setup response of the WPT setup request through the WLAN link, where the WPT setup response may indicate whether the WPT link is successfully set up.

In a possible implementation, the method further includes: receiving a WPT report, where the WPT report reports WPT status information.

In a possible implementation, the method further includes: before receiving the WPT report, sending a WPT report request, where the WPT report request requires reporting of WPT status information.

In a possible implementation, the method further includes: sending WPT teardown, where the WPT teardown indicates that the third AMP apparatus is to stop a WPT process; and receiving an ACK, where the ACK indicates that the first AMP apparatus successfully receives an indication of stopping the WPT process, and the second AMP apparatus stops the WPT process.

In a possible implementation, the WPT setup response further includes at least one of the following fields: a category field, a WPT action field, a status code field, a WPT setup parameter field, and a WPT status control field, where the category field indicates that a category of the WPT setup response is WPT category information, the WPT action field indicates that an action type corresponding to the WPT action field is the WPT setup response, the status code field indicates whether the WPT link is successfully set up, the WPT setup parameter field indicates a parameter used for setting up the WPT link, and the WPT status control field indicates WPT status information to be reported in the WPT report.

In a possible implementation, the WPT setup parameter field includes at least one of the following fields: a WPT frequency range field, a WPT modulation field, a WPT start time field, and a WPT duration field, where the WPT frequency range field indicates a frequency range used in the WPT process, the WPT modulation field indicates a modulation scheme used in the WPT process, the WPT start time field indicates a start time of the WPT process, and the WPT duration field indicates a time length for which the WPT process lasts.

In a possible implementation, the WPT status control field includes at least one of the following fields: whether to report a direct current voltage output by a rectifier, whether to report a voltage of an energy storage, whether to report a received power, and whether to report a temperature.

In a possible implementation, the WPT report request further includes at least one of the following fields: a category field, a WPT action field, and a WPT status control field, where the category field indicates that a category of the WPT report request is WPT category information, the WPT action field indicates that an action type corresponding to the WPT action field is the WPT report request, and the WPT status control field indicates WPT status information to be reported in the WPT report.

In a possible implementation, the WPT status control field includes at least one of the following fields: whether to report a direct current voltage output by a rectifier, whether to report a voltage of an energy storage, whether to report a received power, and whether to report a temperature.

In a possible implementation, the WPT teardown further includes at least one of the following fields: a category field and a WPT action field, where the category field indicates that the WPT teardown is WPT category information, the WPT action field indicates an action type of the WPT category information, and the action type includes the WPT teardown.

In a possible implementation, the method further includes: sending WPT control, where the WPT control is used to start or stop the WPT process.

According to a third aspect, an embodiment of this application provides a first AMP apparatus, configured to perform the method according to any one of the first aspect or the possible implementations. The first AMP apparatus includes a module configured to perform the method according to any one of the first aspect or the possible implementations.

According to a fourth aspect, an embodiment of this application provides a third AMP apparatus, configured to perform the method according to any one of the second aspect or the possible implementations. The third AMP apparatus includes a module configured to perform the method according to any one of the second aspect or the possible implementations.

According to a fifth aspect, an embodiment of this application provides a first AMP apparatus. The first AMP apparatus includes a processor, configured to perform the method according to any one of the first aspect or the possible implementations. The processor is configured to execute a program stored in a memory. When the program is executed, the method according to any one of the first aspect or the possible implementations is performed.

In a possible implementation, the memory is located outside the first AMP apparatus.

In a possible implementation, the memory is located inside the first AMP apparatus.

In this embodiment of this application, the processor and the memory may also be integrated into one component. In other words, the processor and the memory may also be integrated together. For example, the first AMP apparatus may be a chip.

In a possible implementation, the first AMP apparatus further includes a transceiver. The transceiver is configured to: receive or send information.

According to a sixth aspect, an embodiment of this application provides a third AMP apparatus. The third AMP apparatus includes a processor, configured to perform the method according to any one of the second aspect or the possible implementations. The processor is configured to execute a program stored in a memory. When the program is executed, the method according to any one of the second aspect or the possible implementations is performed.

In a possible implementation, the memory is located outside the third AMP apparatus.

In a possible implementation, the memory is located inside the third AMP apparatus.

In this embodiment of this application, the processor and the memory may also be integrated into one component. In other words, the processor and the memory may also be integrated together. For example, the third AMP apparatus may be a chip.

In a possible implementation, the third AMP apparatus further includes a transceiver. The transceiver is configured to: receive or send information.

According to a seventh aspect, an embodiment of this application provides a first AMP apparatus. The first AMP apparatus includes a logic circuit and an interface. The logic circuit is coupled to the interface. The interface is configured to: input and/or output information. The logic circuit is configured to perform the method according to any one of the first aspect or the possible implementations.

According to an eighth aspect, an embodiment of this application provides a third AMP apparatus. The third AMP apparatus includes a logic circuit and an interface. The logic circuit is coupled to the interface. The interface is configured to: input and/or output information. The logic circuit is configured to perform the method according to any one of the second aspect or the possible implementations.

According to a ninth aspect, an embodiment of this application provides a computer-readable storage medium. The computer-readable storage medium is configured to store a computer program, and when the computer program runs on a computer, the method according to either of the first aspect and the second aspect or the possible implementations is performed.

According to a tenth aspect, an embodiment of this application provides a computer program product. When the computer program product runs on a computer, the method according to either of the first aspect and the second aspect or the possible implementations is performed.

According to an eleventh aspect, an embodiment of this application provides a computer program. When the computer program runs on a computer, the method according to either of the first aspect and the second aspect or the possible implementations is performed.

According to a twelfth aspect, an embodiment of this application provides a communication system. The communication system includes a first AMP apparatus and/or a third AMP apparatus, the first AMP apparatus is configured to perform the method according to any one of the first aspect or the possible implementations of the first aspect, and the third AMP apparatus is configured to perform the method according to any one of the second aspect or the possible implementations of the second aspect.

### BRIEF DESCRIPTION OF DRAWINGS

FIG. 1 is a diagram of a structure of an AMP STA according to an embodiment of this application;
FIG. 2 is a diagram of a structure of a second AMP apparatus according to an embodiment of this application;
FIG. 3a is a diagram of a communication system according to an embodiment of this application;
FIG. 3b is a diagram of a communication system shown by using an example in which a second AMP apparatus is an AP and a first AMP apparatus is an AMP STA;
FIG. 3c is a diagram of a communication system shown by using an example in which a second AMP apparatus is a relay node and a first AMP apparatus is an AMP STA;
FIG. 4a is a diagram of another communication system according to an embodiment of this application;
FIG. 4b is a diagram of a communication system shown by using an example in which a second AMP apparatus is an energizer and a first AMP apparatus is an AMP STA;
FIG. 5a is a diagram of an interaction phase of a wireless power transfer method according to an embodiment of this application;
FIG. 5b is a schematic flowchart of a wireless power transfer method shown in FIG. 3b;
FIG. 5c is a schematic flowchart of a wireless power transfer method shown in FIG. 3c;
FIG. 5d is a schematic flowchart of a wireless power transfer method shown in FIG. 4b;
FIG. 6 is a schematic flowchart of a wireless power transfer method according to an embodiment of this application;
FIG. 7a is a diagram of a format of first capability indication information according to an embodiment of this application;
FIG. 7b is a diagram of a format of a first capability element according to an embodiment of this application;
FIG. 7c is a diagram of a format of a first capability frame according to an embodiment of this application;
FIG. 8a is a diagram of another format of first capability indication information according to an embodiment of this application;
FIG. 8b is a diagram of still another format of first capability indication information according to an embodiment of this application;
FIG. 9a is a diagram of a format of second capability indication information according to an embodiment of this application;
FIG. 9b is a diagram of a format of a second capability element according to an embodiment of this application;
FIG. 9c is a diagram of a format of a second capability frame according to an embodiment of this application;
FIG. 10a is a diagram of another format of second capability indication information according to an embodiment of this application;
FIG. 10b is a diagram of still another format of second capability indication information according to an embodiment of this application;
FIG. 10c is a diagram of yet another format of second capability indication information according to an embodiment of this application;
FIG. 11a shows a category (category) field in an existing Wi-Fi protocol;
FIG. 11b is a diagram of a WPT category and a WPT action field according to an embodiment of this application;
FIG. 12a is a diagram of a WPT setup parameter field according to an embodiment of this application;
FIG. 12b is a diagram of a WPT status control field according to an embodiment of this application;
FIG. 13 is a diagram of parameter selection of a WPT status control field according to an embodiment of this application;
FIG. 14a is a diagram of a WPT power control field according to an embodiment of this application;
FIG. 14b is a diagram of WPT status information according to an embodiment of this application;
FIG. 15 is a diagram of a structure of an AMP apparatus according to an embodiment of this application;
FIG. 16 is a diagram of a structure of an AMP apparatus according to an embodiment of this application; and
FIG. 17 is a diagram of a structure of an AMP apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include", "have", and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that a specific feature, structure, or characteristic described in combination with the embodiments may be included in at least one embodiment of this application. The phrase appearing at various locations in this specification may neither necessarily mean a same embodiment, nor mean an independent or optional embodiment exclusive from another embodiment. It may be understood explicitly and implicitly by a person skilled in the art that embodiments described in this specification may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate that only A exists, only B exists, and both A and B exist. A and B may be singular or plural. The term "or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of the sub-information may be the same or different.

In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device through a bus, a cable, or an interface.

The following describes fields in embodiments of this application.

The technical solutions provided in embodiments of this application may be applied to the AMP field, for example, may support wireless power transfer (wireless power transfer, WPT), wireless local area network (wireless local area network, WLAN), or institute of electrical and electronics engineers (institute of electrical and electronics engineers, IEEE) series protocols.

The IEEE 802.11 AMP topic interest group (topic interest group, TIG) and study group (study group, SG) were set up in May 2022 and March 2023 respectively. The AMP task group (task group, TG) was established in May 2024 and started formulation of the IEEE 802.11 AMP specification. For example, an AMP device in the AMP field may satisfy at least one of the following features: (1) There is at least one data communication mode on a sub-1 GHz (Sub-1 GHz) frequency band. (2) There is at least one data communication mode on a 2.4 GHz frequency band, and a communication access category (access category, AC) is set to access category_background (access category_background, AC_BK). (3) There is at least one WPT mode on a sub-1 GHz frequency band to indicate radio frequency (radio frequency, RF) energy harvesting (energy harvesting). For example, an AMP application scenario includes but is not limited to a smart home, a smart farm, a smart factory, logistics/warehousing, supermarket distribution, indoor positioning, and a data center.

The method provided in embodiments of this application may be applied to a protocol related to AMP in IEEE 802.11, or another protocol in the IEEE 802.11 series, for example, the 802.11a/b/g protocol, the 802.11n protocol, the 802.11ac protocol, the 802.11ax protocol, the 802.11be protocol, the 802.11bn protocol (802.11bn is also referred to as Wi-Fi 8, or referred to as ultra high reliability (ultra high reliability, UHR) or ultra high reliability and throughput (ultra high reliability and throughput, UHRT)), or a next-generation protocol. Examples are not enumerated herein. The technical solutions provided in embodiments of this application may be further applied to a wireless personal area network (wireless personal area network, WPAN) based on millimeter wave (millimeter wave, MMW) and ultra-wideband (ultra-wideband, UWB) technologies. For example, the method provided in embodiments of this application may be applied to IEEE 802.15 series protocols such as the 802.15.4a protocol, the 802.15.4z protocol, the 802.15.4ab protocol, or a future-generation UWB WPAN protocol. Examples are not enumerated herein.

The technical solutions provided in embodiments of this application may be further applied to the following communication systems, for example, which may be an internet of things (internet of things, IoT) system, vehicle-to-everything (vehicle-to-everything, V2X, where X may represent everything), device-to-device (device-to-device, D2D), a narrow band internet of things (narrow band internet of things, NB-IoT) system, a long term evolution (long term evolution, LTE) system, a 5th generation (5th generation, 5G) communication system, and a new communication system emerging in future communication development. For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

With increasing popularization of AMP application scenarios, an AMP system is used in more scenarios or industries, for example, is used in an internet of things industry, is used in an internet of things industry or a banking industry, or is used in an enterprise office, a stadium and an exhibition hall, a concert hall, a hotel room, a dormitory, a ward, a classroom, a supermarket, a square, a street, a generation workshop, and a warehouse. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an internet of things node, an entertainment terminal (for example, a wearable device like an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

Although embodiments of this application are mainly based on a network of the IEEE 802.11 series standards, various aspects in embodiments of this application may be further extended to other networks that use various standards or protocols, for example, Bluetooth (Bluetooth), a high performance radio LAN (high performance radio LAN, HIPERLAN) (a wireless standard similar to the IEEE 802.11 standard), a wide area network (wide area network, WAN), or other networks known or developed in the future.

The following describes apparatuses and terms in embodiments of this application.

### 1. Apparatus configured to harvest RF energy

Ambient power may include but is not limited to energy existing in an environment such as radio frequency energy (that is, RF energy), kinetic energy, thermal energy, and solar energy. The essence of RF energy harvesting is to convert RF energy such as an RF signal into electric energy such as a direct current (direct current, DC) (RF-DC). For example, the apparatus configured to harvest RF energy may convert RF energy harvested by the apparatus configured to harvest RF energy into electric energy and then store the electric energy in an energy storage unit (such as a capacitor or a battery), or may directly use the harvested RF energy to drive a logic circuit, a digital chip, a sensing component, or the like, to complete at least one of the following functions: modulating a reflected signal, sending a reflected signal, and collecting and processing sensing information. The reflected signal shown herein is a reflected signal for backscatter (backscatter) communication.

In embodiments of this application, the apparatus configured to harvest RF energy may also be referred to as an apparatus configured to convert RF energy into DC, an apparatus that can implement RF energy harvesting, a low-power apparatus, an AMP station (station, STA), or the like. A specific name of the apparatus is not limited in embodiments of this application. That the AMP STA shown herein may convert RF energy harvested by the AMP STA into electric energy is merely an example. For example, the AMP STA may also convert the RF energy into other energy, and the other energy may be used to implement a function similar to that of the electric energy. For ease of description, the apparatus configured to harvest RF energy is referred to as a first AMP apparatus (only as an example) below. For example, the first AMP apparatus may include an AMP STA. The AMP STA may be an entire low-power device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module.

The AMP STA may be a low-power IoT device that supports RF energy harvesting (energy harvesting). The AMP STA may support radio frequency energy reception, communication, or sensing by using an AMP protocol or a WLAN protocol, and has a capability of wireless power transfer, communication, or sensing with another non-AP STA or access point in an AMP network or a WLAN network. For example, the AMP STA may include a type-A AMP STA, a type-B AMP STA, and a type-C AMP STA. Certainly, classification of the AMP STA herein is merely an example. For example, with progress of the standard, the AMP STA may be further classified in another manner subsequently. This is not limited in embodiments of this application.

The following describes, by using an example, features that are satisfied by the type-A AMP STA to the type-C AMP STA.

The type-A AMP STA can satisfy at least one of the following: RF energy being a part of an energy source of the type-A AMP STA, having a relatively strong communication capability, having a relatively strong energy storage capability, and supporting a Wi-Fi protocol. The relatively strong communication capability shown herein may be relative to the type-B AMP STA and the type-C AMP STA. For example, the type-A AMP STA can process a PPDU whose modulation scheme is OFDM modulation, or process a PPDU whose modulation scheme is on-off keying (on-off keying, OOK) modulation. For another example, the type-A AMP STA can support a protocol such as IEEE 802.11b/g/n/ac/ax/be/bn. The relatively strong energy storage capability shown herein is relative to the type-B AMP STA and the type-C AMP STA. For example, the type-A AMP STA may be provided with a battery.

The type-B AMP STA can satisfy at least one of the following: having a specific energy storage capability (for example, the energy storage capability is greater than or equal to a first threshold, and is less than or equal to a second threshold), and supporting a low-power receiving and sending operation. The energy storage capability of the type-B AMP STA is lower than an energy storage capability of the type-A AMP STA, but is higher than an energy storage capability of the type-C AMP STA. For example, the first threshold may be greater than or equal to a third threshold. Specific values of the first threshold, the second threshold, and the third threshold are not limited in embodiments of this application.

The type-C AMP STA can satisfy at least one of the following: an energy storage capability being lower than or equal to a third threshold (for example, the threshold may be equal to 0), supporting a low-power receiving and sending operation, and supporting backscatter (backscatter) communication. The type-C AMP STA can implement communication by harvesting RF energy. For example, the type-C AMP STA may not support a Wi-Fi protocol, for example, a protocol such as IEEE 802.11b/g/n/ac/ax/be/bn.

The foregoing three types of AMP STAs all have an RF energy harvesting capability. For the foregoing three types of AMP STAs, for an energy storage capability, the type A>the type B>the type C; for a communication capability, the type A>the type B>the type C; and for power consumption, the type A>the type B>the type C, that is, the type C has lowest power consumption.

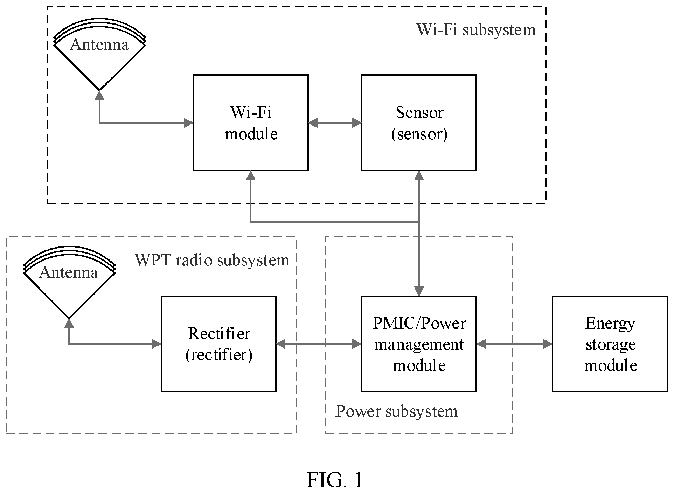

FIG. 1 is a diagram of a structure of an AMP STA according to an embodiment of this application. As shown in FIG. 1, the AMP STA may include at least one of the following: a WPT radio subsystem (WPT radio subsystem) or a power subsystem (power subsystem). For example, the AMP STA may further include a Wi-Fi subsystem. Names of the subsystems shown herein are merely examples, and should not be construed as a limitation on embodiments of this application.

The power subsystem may include a power management integrated circuit (power management integrated circuit, PMIC) or a power management module. The power management module may be configured to provide an appropriate current (I) and voltage (V) for an energy storage module to store electric energy. The PMIC may be configured to provide appropriate voltage and timing control for the rest of the system (such as the Wi-Fi subsystem). For example, the power subsystem may further include a voltage regulator (for example, DC/DC) (not shown in FIG. 1). When a direct current voltage output by a rectifier is excessively low (for example, lower than an available voltage of the PMIC), the voltage regulator may be used to increase the voltage, to convert the voltage of the rectifier into an available voltage of the PMIC or the power management module.

The WPT radio subsystem may include an antenna and a rectifier. The antenna may be configured to receive a WPT signal, and the rectifier may be configured to convert RF energy into a stable direct current voltage.

The Wi-Fi subsystem may include an antenna, a Wi-Fi module, and a sensor (sensor). For example, the Wi-Fi module may include a baseband circuit and a radio frequency circuit. The baseband circuit may be configured to process a baseband signal, and the radio frequency circuit may be configured to process a radio frequency signal. For example, the baseband circuit may be at least one of the following: a processor, a channel encoder, a digital signal processor, a modem, or an interface circuit. For example, the radio frequency circuit may include at least one of the following: a radio frequency amplifier, a frequency mixer, a filter, and a demodulator. The Wi-Fi subsystem may be configured to support communication of a WLAN link (a communication link or a P2P link shown below), for example, support sending of at least one of the following on the WLAN link: first capability indication information, a WPT setup request, a WPT report, or an acknowledgment (acknowledgment, ACK); and also support receiving of at least one of the following on the WLAN link: second capability indication information, a WPT setup response, a WPT report request, or WPT teardown. The processor may be a general-purpose processor, a digital signal processor, an application-specific integrated circuit, a field programmable gate array, another programmable logic device, a discrete gate, a transistor logic device, a discrete hardware component, or the like, and may implement or perform the methods, steps, and the like in embodiments of this application. The general-purpose processor may be a microprocessor or any conventional processor or the like. For example, the processor may be configured to: process a Wi-Fi protocol and communication data, control an entire AMP apparatus, execute a software program, and process data of the software program. For example, after the first AMP apparatus is powered on, the processor may read a software program in a memory (not shown in FIG. 1), interpret and execute instructions of the software program, and process data of the software program. When data needs to be sent in a wireless manner, the processor performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the first AMP apparatus, the radio frequency circuit receives a radio frequency signal through the antenna, converts the radio frequency signal into a baseband signal, and outputs the baseband signal to the processor. The processor converts the baseband signal into data, and processes the data.

In an example, for a type-A AMP STA, the AMP STA may include a WPT radio subsystem, a power subsystem, a Wi-Fi subsystem, and an energy storage module. In another example, for a type-B AMP STA, the AMP STA may include a WPT radio subsystem, a power subsystem, and an energy storage module. For example, the AMP STA may further include a Wi-Fi subsystem. In still another example, for a type-C AMP STA, the AMP STA may include a WPT radio subsystem and the like. A structure of the type-C AMP STA is not limited in embodiment of this application.

The structure of the AMP STA shown herein is merely an example. In a specific implementation, the AMP STA may have more or fewer components. This is not limited in embodiments of this application. The wireless transfer method provided in embodiments of this application may be applied to the type-A AMP STA or the type-B AMP STA.

### 2. Apparatus configured to provide RF energy

The apparatus configured to provide RF energy (or referred to as an apparatus having a charging function) may provide RF energy for the first AMP apparatus. For example, the apparatus configured to provide RF energy may send a WPT signal to the first AMP apparatus to provide RF energy for the first AMP apparatus. The WPT signal shown herein is an RF signal. For example, the WPT signal may also be referred to as a power transfer signal, a signal for RF energy transmission, or a signal for RF energy harvesting. A name of the WPT signal is not limited in embodiments of this application.

For ease of description, the apparatus configured to provide RF energy is referred to as a second AMP apparatus (only as an example) below. The second AMP apparatus may have the following examples:

In an example, the second AMP apparatus may be an AP, or may be referred to as an AMP AP.

The AP is an apparatus having a wireless communication function, supports wireless power transfer, communication, or sensing by using a WLAN protocol (including an AMP protocol), has a function of wireless power transfer, communication, or sensing with another device (for example, a non-access point station (non-access point station, non-AP STA), another access point, or an AMP STA) in an AMP network or a WLAN network, and certainly, may further have a function of communication or sensing with another device. For example, the AP is an apparatus that provides a service for the non-AP STA, or the AP is an apparatus that provides a service for the AMP STA, and may support the 802.11 series protocols or subsequent protocols.

The AP is equivalent to a bridge that connects a wired network and a wireless network. The AP is mainly used to connect wireless network clients together, and then connect the wireless network to the Ethernet. The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. For example, the access point may be an access point for a terminal (for example, a mobile phone) to access a wired (or wireless) network, and is mainly deployed in a home, a building, and a campus. A typical coverage radius is tens to hundreds of meters. Certainly, the access point may also be deployed outdoors. For another example, the AP may be a communication entity, for example, a communication server, a router, a switch, or a bridge, or the AP may include various forms of macro base stations, micro base stations, relay stations, and the like. For another example, the AP may be configured to transmit energy to the AMP STA. Certainly, the AP may also be a chip, a processing system, or a module in the various forms of devices, to implement a method and a function in embodiments of this application.

For example, the second AMP apparatus may also be an AP affiliated with a multi-link device (multi-link device, MLD). For example, the multi-link device (multi-link device, MLD) means that the device includes a plurality of APs at the same time, which respectively operate on different frequency bands or channels. The multi-link device includes a plurality of affiliated APs. The affiliated AP may be a physical AP or a logical AP. Each AP may operate on one link, one frequency band, one channel, or the like.

In another example, the second AMP apparatus may be an energizer (energizer) (or referred to as an energizing node, an energizing apparatus, or the like). For ease of description, the following uses the energizer as an example for description.

The energizer may be configured to provide RF energy for the AMP STA. The energizer may further communicate with the AP by using a Wi-Fi protocol. For example, the energizer does not have low power consumption communication with the AMP STA. For example, there may be no communication link between the energizer and the AMP STA.

In still another example, the second AMP apparatus may be a relay node (relay node) (or referred to as a repeater, a relay apparatus, or the like). The relay node may be configured to: amplify a signal, compensate for signal attenuation, and support communication (such as long-range communication). Generally, both the energizer and the relay node may be configured to provide RF energy, and a difference lies in that the relay node may further implement long-range communication. For ease of description, the following uses the relay node as an example for description.

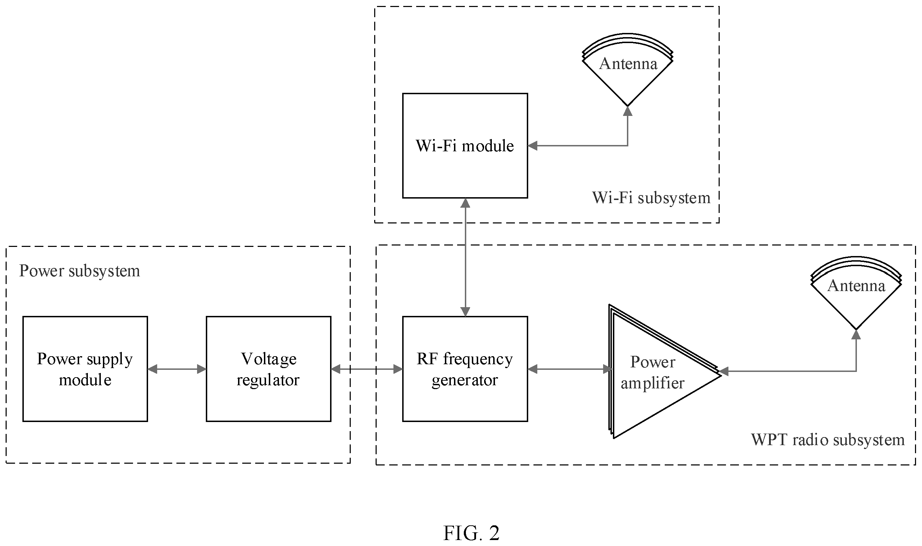

FIG. 2 is a diagram of a structure of a second AMP apparatus according to an embodiment of this application. As shown in FIG. 2, the apparatus includes at least one of the following: a power subsystem, a WPT radio subsystem, and a Wi-Fi subsystem. Names of the subsystems shown herein are merely examples, and should not be construed as a limitation on embodiments of this application.

The power subsystem may include a power supply (power supply) module and a voltage regulator (such as DC/DC). For example, the power supply module may be configured to provide a direct current power supply, and the voltage regulator is an effective component that converts one direct current voltage into another direct current voltage. When an input voltage is low, the voltage regulator may be configured to increase the voltage. When an input voltage is high, the voltage regulator may be configured to reduce the voltage. These components can supply direct current (DC) power to different parts of the system at a correct voltage.

The WPT radio subsystem may include an RF frequency generator, a power amplifier (power amplifier, PA), and an antenna. The WPT radio subsystem may be configured to transmit a WPT signal. For example, the radio frequency frequency generator is configured to generate a radio frequency of a communication or WPT signal, the power amplifier is configured to amplify a power of the WPT signal, and the antenna is configured to transmit the WPT signal.

The Wi-Fi subsystem may include an antenna and a Wi-Fi module. For example, the Wi-Fi module may include a baseband circuit and a radio frequency circuit. For descriptions of the Wi-Fi module, refer to FIG. 1. Details are not described herein again. The Wi-Fi subsystem may be configured to support communication of a WLAN link (a communication link or a P2P link shown below), for example, support sending of at least one of the following on the WLAN link: second capability indication information, a WPT setup response, a WPT report request, or WPT teardown; and support receiving of at least one of the following on the WLAN link: first capability indication information, a WPT setup request, a WPT report, or an ACK. For descriptions of the Wi-Fi module and the antenna, refer to the descriptions in FIG. 1. Details are not described herein again.

The structure of the second AMP apparatus shown herein is merely an example. In a specific implementation, the second AMP apparatus may have more or fewer components. This is not limited in embodiments of this application.

### 3. Apparatus communicating with a first AMP apparatus

The apparatus may be configured to communicate with the first AMP apparatus, the apparatus can communicate with the first AMP apparatus, or the apparatus is capable of communicating with the first AMP apparatus. For example, the apparatus may send information to the first AMP apparatus on a WLAN link, or receive information from the first AMP apparatus on a WLAN link. For ease of description, the apparatus that can communicate with the first AMP apparatus is referred to as a third AMP apparatus in embodiments of this application.

Based on different capabilities, the second AMP apparatus may also be configured to communicate with the first AMP apparatus. For example, the second AMP apparatus may be configured to provide RF energy, and may also be configured to communicate with the first AMP apparatus. For example, when the second AMP apparatus is an AP or a relay node, the AP or the relay node may be configured to provide RF energy, and may also communicate with the first AMP apparatus.

In an example, the third AMP apparatus may be the same as the second AMP apparatus. For example, the second AMP apparatus and the third AMP apparatus may be a same apparatus. The apparatus may be configured to provide RF energy, and may also communicate with the first AMP apparatus. In this case, the second AMP apparatus (that is, the third AMP apparatus) may be an AP or a relay node.

In another example, the third AMP apparatus is different from the second AMP apparatus. For example, the second AMP apparatus is an energizer, and the third AMP apparatus may be an apparatus that can communicate with the first AMP apparatus, such as an AP or a relay node. Examples are not enumerated herein.

In embodiments of this application, the first AMP apparatus, the second AMP apparatus, and the third AMP apparatus are distinguished from each other based on different functions. Specific product forms of the three apparatuses are not limited in embodiments of this application.

### 4. WLAN link and WPT link

WLAN link: The WLAN link is a link used for wireless transmission between two devices in a WLAN. For example, a transmit signal is transmitted through the WLAN link, and a receive end can demodulate useful information from a receive signal. The useful information may include but is not limited to data, control information, management information, or the like. The WLAN link shown in embodiments of this application may include but is not limited to an AMP-based communication link, a P2P link, a communication link, or the like. The useful information includes but is not limited to the following: first capability indication information, second capability indication information, a WPT setup request, a WPT setup response, a WPT report request, a WPT report, WPT teardown, an ACK, or the like.

WPT link (or referred to as a WPT power transfer link): The WPT link is a link used for wireless power transfer between two devices in a WLAN. For example, a transmit signal is transmitted through the WPT link, and a receive end can directly perform radio frequency-to-direct current energy conversion on a received radio frequency signal. Alternatively, the receive end may not perform information demodulation.

The following describes a system in embodiments of this application.

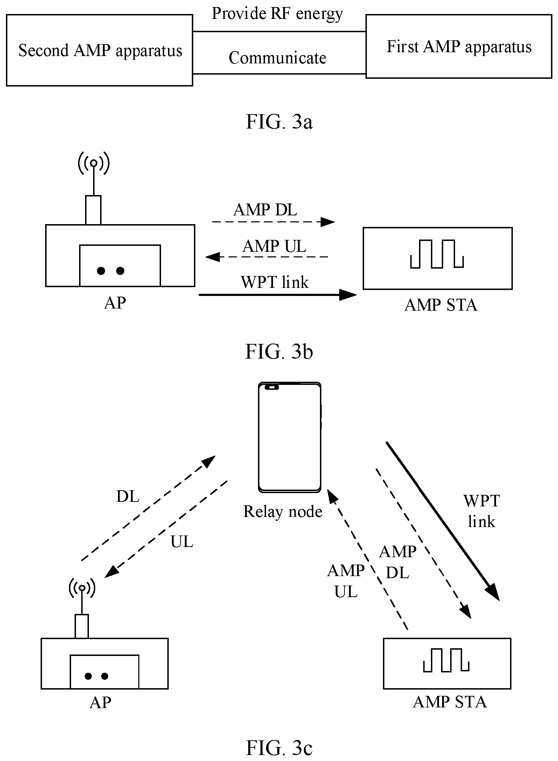

FIG. 3a is a diagram of a communication system according to an embodiment of this application. A second AMP apparatus in FIG. 3a may provide RF energy for a first AMP apparatus, and may also communicate with the first AMP apparatus.

In a possible implementation, as shown in FIG. 3b, for example, the second AMP apparatus is an AP and the first AMP apparatus is an AMP STA. A WPT link in FIG. 3b may be used to transmit a WPT signal. In other words, a link used to transmit a WPT signal may be referred to as a WPT link. The WPT link may also be referred to as a power transfer link or the like. A specific name of the WPT link is not limited in embodiments of this application. In FIG. 3b, an AMP downlink (downlink, DL) is a downlink from an AP to an AMP STA, and an AMP uplink (uplink, UL) is an uplink from the AMP STA to the AP. The AMP DL or the AMP UL may also be referred to as an AMP-based communication link.

The WPT link and the communication link (or referred to as a data link) shown in this embodiment of this application are distinguished from each other based on functions. In a specific implementation, frequency bands supported by the two links may be the same or different. The communication link may belong to a WLAN link. In an example, the WPT link may not belong to the WLAN link. In another example, the WPT link may also belong to the WLAN link. Whether the WPT link belongs to the WLAN link is not limited in this embodiment of this application. For example, the WLAN link may include a P2P link. The WLAN link shown in this embodiment of this application may be one of the following links: a P2P link, an AMP UL, an AMP DL, a UL, or a DL.

For example, the AP and the AMP STA can communicate with each other through the communication link. For example, the AMP DL or the AMP UL may support a 2.4 GHz frequency band or a sub-1 GHz (Sub-1 GHz) frequency band. The AP may further provide a WPT signal for the AMP STA. For example, the WPT link may support a 2.4 GHz frequency band or a sub-1 GHz frequency band. For example, the AMP STA is a type-A or type-B AMP STA, and a time at which the AP sends the WPT signal may be decoupled from a time at which the AP communicates with the AMP STA. For another example, the AMP STA is a type-C AMP STA, and a time at which the AP sends the WPT signal may be coupled to a time at which the AP communicates with the AMP STA. That is, the AMP STA needs to receive the WPT signal to perform energy harvesting and then perform communication.

For example, the AMP DL and the AMP UL may support a PPDU format in a currently existing Wi-Fi protocol (such as the 802.11b/g/n protocol). Certainly, the AMP DL and the AMP UL may also support a subsequent PPDU format in another Wi-Fi protocol, and the like. Details are not described herein again. For another example, the AMP DL and the AMP UL may support a PPDU format in an AMP protocol, for example, a subsequent new PPDU format. A PPDU format used for communication between the AP and the AMP STA is not limited in this embodiment of this application.

In another possible implementation, as shown in FIG. 3c, for example, the second AMP apparatus is a relay node and the first AMP apparatus is an AMP STA. For related descriptions of the WPT link, the AMP DL, and the AMP UL, refer to FIG. 3b. The relay node in FIG. 3c may further communicate with the AP through the DL or the UL.

For example, the relay node may communicate with the AMP STA, and the relay node may provide a WPT signal for the AMP STA. The UL or the DL in FIG. 3c may support a sub-1 GHz frequency band, a 2.4 GHz frequency band, a 5 GHz frequency band, a 6 GHz frequency band, or the like. Examples are not enumerated herein. The UL or the DL in FIG. 3c may support a Wi-Fi protocol (such as the 802.11b/g/n/ac/ax/be/bn protocol), another communication protocol, or the like. This is not limited in this embodiment of this application. For the frequency band supported by the AMP UL or the AMP DL and the frequency band supported by the WPT link, refer to descriptions in FIG. 3b. Details are not described herein again.

The AMP UL, the AMP DL, the UL, and the DL shown in embodiments of this application are all communication links. A PPDU format supported by the AMP UL or the AMP DL may be different from a PPU format supported by the UL or the DL. For example, the UL and the DL may support more frequency bands or more PPDU formats. For another example, a PPDU format supported by the AMP UL or the AMP DL may be an AMP PPU, and a format of the AMP PPDU is different from an existing PPDU format in a Wi-Fi protocol. For another example, a protocol supported by the UL or the DL may not be limited to the Wi-Fi protocol. Differences between the communication links are not enumerated herein.

The foregoing descriptions of the frequency band or the PPDU format of the AMP UL, the AMP DL, the UL, or the DL are also applicable to information transmitted on each link. For specific information about transmission on different links, refer to the following description. Details are not described herein.

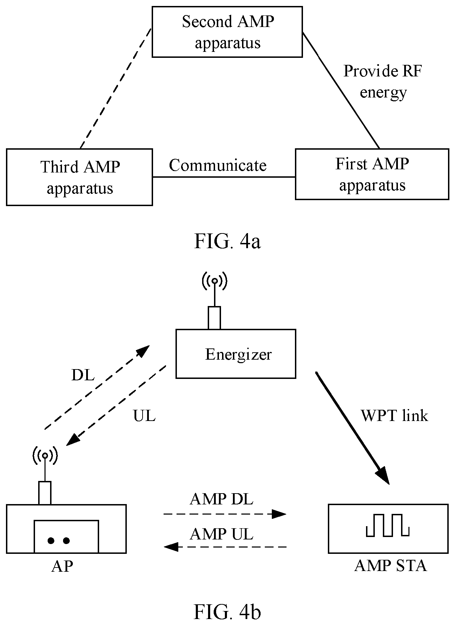

FIG. 4a is a diagram of another communication system according to an embodiment of this application. A second AMP apparatus and a third AMP apparatus in FIG. 4a are different apparatuses. The second AMP apparatus is configured to provide RF energy for a first AMP apparatus, and the third AMP apparatus is configured to communicate with the first AMP apparatus.

For example, as shown in FIG. 4b, the second AMP apparatus is an energizer, the first AMP apparatus is an AMP STA, and the third AMP apparatus is an AP. For descriptions of each link, refer to FIG. 3b or FIG. 3c. Details are not described herein again.

As shown in FIG. 4b, the energizer can provide a WPT signal for the AMP STA, and the AP can communicate with the AMP STA. For descriptions of a frequency band or a PPDU format supported by each link in FIG. 4b, refer to FIG. 3b or FIG. 3c. Details are not described herein again.

Types of the first AMP apparatus, the second AMP apparatus, and the third AMP apparatus shown in FIG. 3b, FIG. 3c, and FIG. 4b are merely examples, and do not constitute a limitation on types of the AP, the AMP STA, the energizer, and the relay node in embodiments of this application. In addition, quantities of apparatuses shown in FIG. 3a to FIG. 3c and FIG. 4a and FIG. 4b are merely examples. In a specific implementation, there may be more or fewer apparatuses. This is not limited in embodiments of this application.

The systems shown in FIG. 3a to FIG. 3c and FIG. 4a and FIG. 4b are merely examples. With progress of the standard, another type of topology structure may also appear subsequently. Any topology structure that is applicable to the interaction procedure shown below falls within the protection scope of embodiments of this application.

Generally, before the second AMP apparatus provides RF energy for the first AMP apparatus, parameter negotiation may be performed between the second AMP apparatus and the first AMP apparatus, and then whether to set up a WPT link is determined.

In view of this, embodiments of this application provide a wireless power transfer method and an apparatus, to improve an interaction procedure between apparatuses, and improve, at a protocol layer, a procedure of assisting in the WPT link through a communication link, so that a first AMP apparatus can implement RF energy harvesting. Therefore, the first AMP apparatus can perform communication, sensing, or the like by using RF energy harvested by the first AMP apparatus. For example, the first AMP apparatus may further store electric energy.

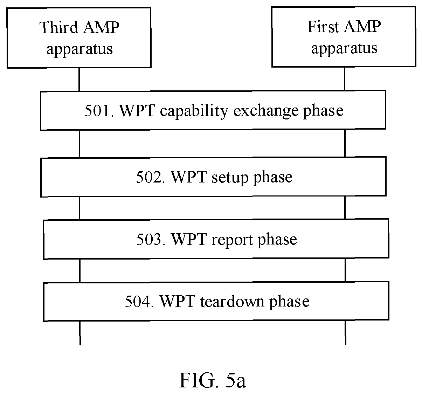

FIG. 5a is a diagram of an interaction phase of a wireless power transfer method according to an embodiment of this application.

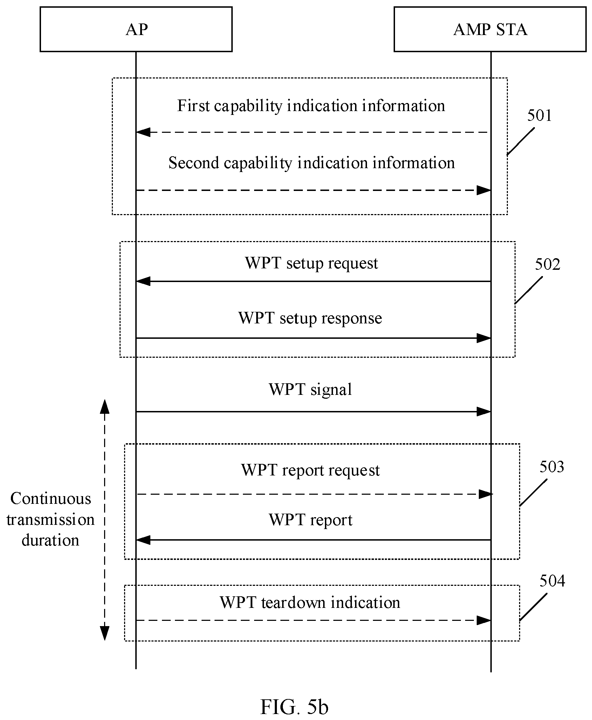

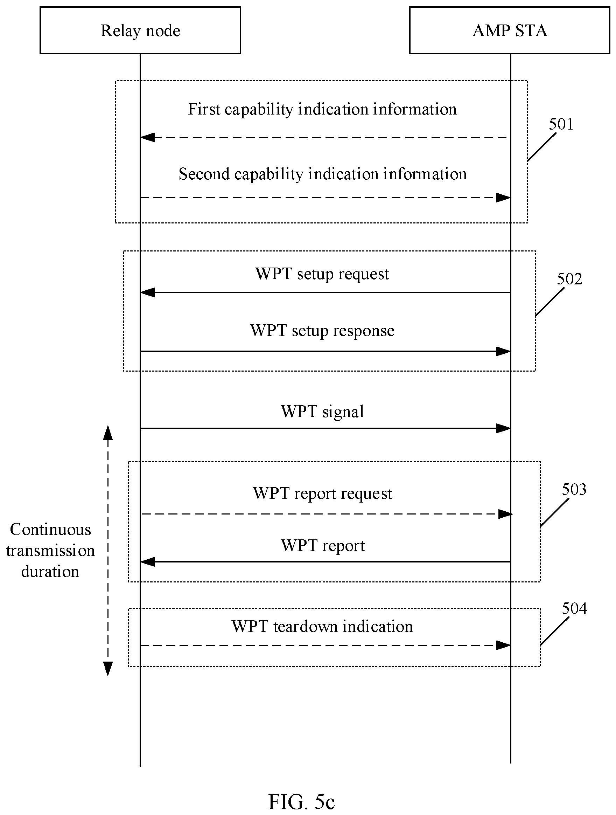

In an example, when the second AMP apparatus (as shown in FIG. 3a to FIG. 3c) can provide RF energy for the first AMP apparatus, and can also communicate with the first AMP apparatus, the second AMP apparatus can interact with the first AMP apparatus, for example, perform parameter negotiation. In this case, the third AMP apparatus and the second AMP apparatus shown in FIG. 5a below may be a same apparatus, as shown in FIG. 5b or FIG. 5c. FIG. 5b is a schematic flowchart of a wireless power transfer method shown in FIG. 3b. FIG. 5c is a schematic flowchart of a wireless power transfer method shown in FIG. 3c.

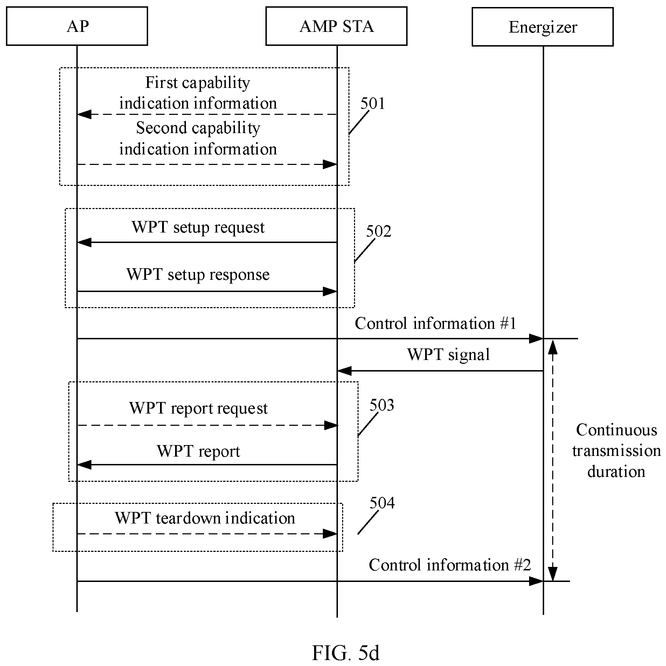

In another example, when the second AMP apparatus (as shown in FIG. 4a or FIG. 4b) cannot communicate with the first AMP apparatus, the third AMP apparatus can interact with the first AMP apparatus. For example, a parameter negotiated between the third AMP apparatus and the first AMP apparatus may include a parameter of the second AMP apparatus. In this case, the third AMP apparatus and the second AMP apparatus shown in FIG. 5a below may be different apparatuses, as shown in FIG. 5d. FIG. 5d is a schematic flowchart of a wireless power transfer method shown in FIG. 4b.

For FIG. 5b, the AP may be associated with the AMP STA, and the AP can communicate with the AMP STA through a WLAN link. For FIG. 5c, the relay node provides RF energy for the AMP STA. For example, the AMP STA can communicate with the relay node through a P2P link. For example, an association has been set up between the relay node and the AP, and a P2P link has been set up between the relay node and the AMP STA. For FIG. 5d, an association has been set up between the energizer and the AP. For example, the energizer has notified the AP of capability information of the energizer. The AP can be associated with the AMP STA. An association setup method or a P2P link setup method is not limited in embodiments of this application. For descriptions of FIG. 5b and FIG. 5c, refer to FIG. 5a. Details are not described again.

As shown in FIG. 5a, an interaction phase of the wireless power transfer method provided in this application includes at least one of the following phases. It should be understood that the following phases may interact with each other, or may be independently implemented.

501. WPT capability exchange (WPT capability exchange) phase.

For example, in the WPT capability exchange phase, the first AMP apparatus may indicate a capability of the first AMP apparatus to the third AMP apparatus. For example, the first AMP apparatus may send first capability indication information to the third AMP apparatus. The first capability indication information may indicate capability information of receiving a WPT signal by the first AMP apparatus. Alternatively, the first capability indication information indicates capability information of performing wireless power transfer by the first AMP apparatus. Alternatively, the first capability indication information may indicate capability information that is of the first AMP apparatus and that is related to receiving a WPT signal. Alternatively, the first capability indication information may indicate, to the third AMP apparatus, capability information of receiving a WPT signal by the first AMP apparatus.

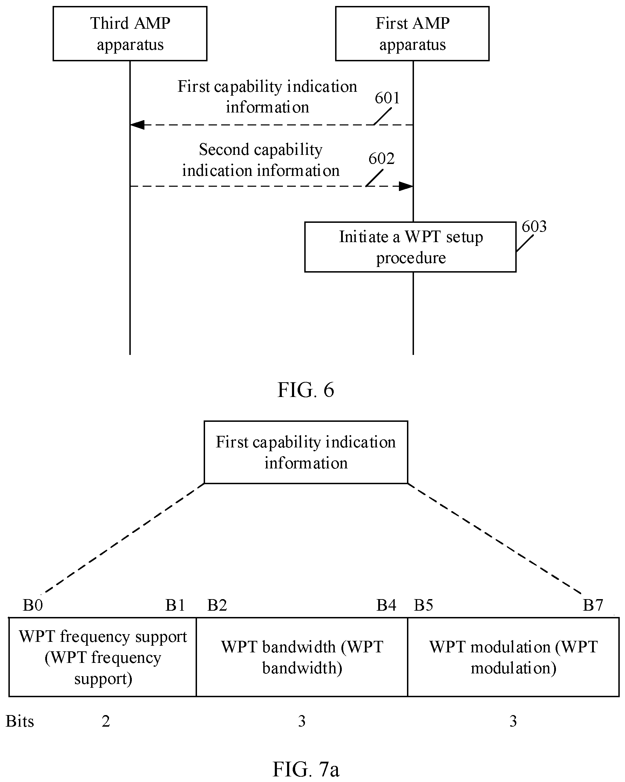

In an example, as shown in FIG. 5b and FIG. 5d, the AMP STA may send first capability indication information to the AP, and the AP receives the first capability indication information. The first capability indication information may be capability information that is related to receiving a WPT signal by the AMP STA and that is indicated by the AMP STA to the AP. In another example, as shown in FIG. 5c, the AMP STA may send first capability indication information to the relay node, and the relay node receives the first capability indication information. The first capability indication information may be capability information that is related to receiving a WPT signal by the AMP STA and that is indicated by the AMP STA to the relay node. For specific content of the first capability indication information, refer to FIG. 6. Details are not described herein again.

For example, in the WPT capability exchange phase, the third AMP apparatus may indicate a capability of the second AMP apparatus to the first AMP apparatus. For example, the third AMP apparatus may send second capability indication information to the first AMP apparatus. The second capability indication information may indicate capability information of sending a WPT signal by the second AMP apparatus. Alternatively, the second capability indication information indicates capability information of performing wireless power transfer by the second AMP apparatus. Alternatively, the second capability indication information may indicate capability information that is of the second AMP apparatus and that is related to sending a WPT signal. Alternatively, the second capability indication information may indicate, to the first AMP apparatus, capability information of sending a WPT signal by the second AMP apparatus.

In an example, as shown in FIG. 5b, the AP may send second capability indication information to the AMP STA, and the AMP STA receives the second capability indication information. The second capability indication information may be capability information that is related to sending a WPT signal by the AP and that is indicated by the AP to the AMP STA. In another example, as shown in FIG. 5c, the relay node may send second capability indication information to the AMP STA, and the AMP STA receives the second capability indication information. The second capability indication information may be capability information that is related to sending a WPT signal by the relay node and that is indicated by the relay node to the AMP STA. In still another example, as shown in FIG. 5d, the AP sends second capability indication information to the AMP STA, and the AMP STA receives the second capability indication information. The second capability indication information may be capability information that is related to sending a WPT signal by the energizer and that is indicated by the AP to the AMP STA. For specific content of the second capability indication information, refer to FIG. 6. Details are not described herein again.

In the WPT capability exchange phase, the step related to the first capability indication information may be optional, or the step related to the second capability indication information may be optional. In this embodiment of this application, the WPT capability exchange phase may also be referred to as an AMP capability exchange phase, a capability negotiation phase, or the like. A specific name of the phase is not limited.

502. WPT setup (WPT setup) phase.

The WPT setup phase is also a setup phase of a WPT procedure (or referred to as a WPT process), for example, may include a WPT setup procedure. The WPT setup procedure is used to prepare for a subsequent WPT procedure, the procedure may be used to determine whether the WPT procedure can be smoothly performed, or the procedure may be used to determine whether a subsequent WPT procedure can be successfully performed. For example, the WPT setup procedure may also be referred to as a setup procedure of a WPT procedure or a setup phase of a WPT procedure. Examples are not enumerated herein.

In an example, an initiator of the WPT setup procedure may be the first AMP apparatus. For example, the first AMP apparatus initiates the WPT setup procedure, and then the third AMP apparatus determines whether the WPT setup procedure can be successfully set up. Generally, a processing capability of the third AMP apparatus is higher than a processing capability of the first AMP apparatus. Therefore, the third AMP apparatus determines whether the WPT setup procedure can be successfully set up, which can effectively improve a success rate of setting up the WPT procedure. Because the first AMP apparatus serves as an end for requesting RF energy, initiating the WPT setup procedure through the first AMP apparatus can further enhance efficiency of providing RF energy by the second AMP apparatus for the first AMP apparatus, so that the second AMP apparatus can charge the first AMP apparatus in time.

In another example, an initiator of the WPT setup procedure may be the third AMP apparatus. For example, after learning of capability information of the first AMP apparatus or capability information of the second AMP apparatus, the third AMP apparatus may initiate a WPT setup procedure. In this case, for example, the first AMP apparatus can accept the WPT setup procedure.

The following descriptions are provided by using an example in which the first AMP apparatus initiates a WPT setup procedure, but this should not be construed as a limitation on embodiments of this application. A difference between the WPT setup procedure initiated by the first AMP apparatus and the WPT setup procedure sent by the third AMP apparatus lies in that a WPT setup response in the WPT setup procedure initiated by the first AMP apparatus may indicate whether setup succeeds, and a WPT setup response in the WPT setup procedure initiated by the third AMP apparatus may be acknowledgment information of the WPT setup request, for example, acknowledging that the first AMP apparatus has correctly received the WPT setup request. Certainly, a difference between the WPT setup responses shown herein is merely an example. In a specific implementation, the WPT setup procedure initiated by the first AMP apparatus may also be similar to the WPT setup procedure sent by the third AMP apparatus. The following descriptions of the WPT setup request and the WPT setup response are also applicable to the WPT setup procedure initiated by the third AMP apparatus.

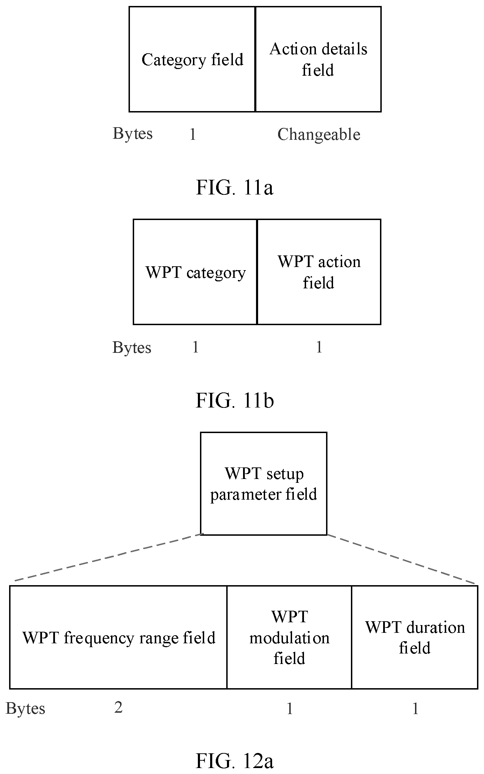

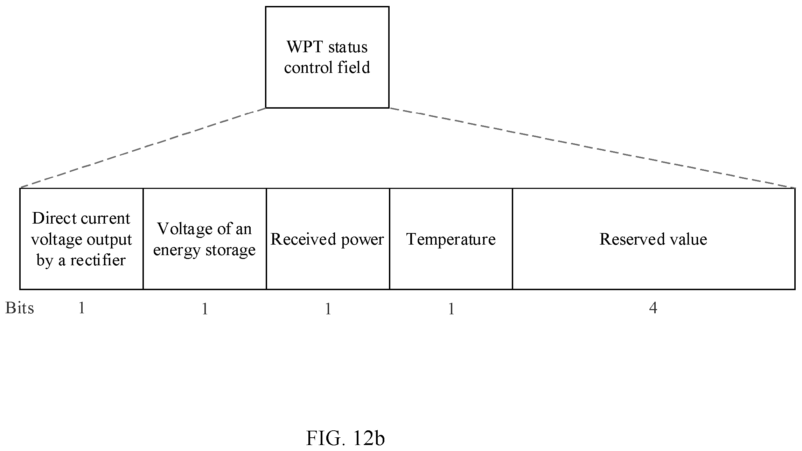

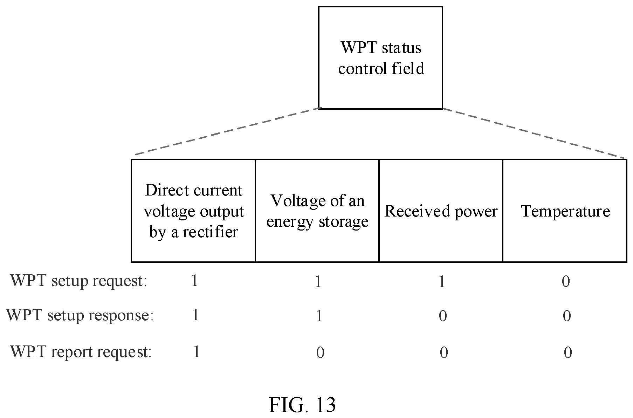

In the WPT setup phase, the first AMP apparatus and the third AMP apparatus can exchange WPT status information. For example, the WPT status information may indicate a WPT status to be reported by the first AMP apparatus in a WPT report. Alternatively, the WPT status information may indicate a WPT status to be reported by the first AMP apparatus in a WPT report. Alternatively, the WPT status information may indicate a WPT status to be reported by the first AMP apparatus. The first AMP apparatus may send a WPT setup request (WPT setup request) including the WPT status information to the third AMP apparatus. After receiving the WPT setup request, the third AMP apparatus may reply with a WPT setup response (WPT setup response). For example, the WPT setup response may indicate whether the WPT procedure can be successfully set up. As shown in FIG. 5b to FIG. 5d, the AMP STA may initiate the WPT setup procedure by sending a WPT setup request. The AP or the relay node may feed back a WPT setup response. For other descriptions of the WPT setup request and the WPT setup response, refer to FIG. 12a, FIG. 12b, and FIG. 13. Details are not described herein.

When the WPT setup procedure indicates that the WPT procedure can be successfully set up, the second AMP apparatus may provide RF energy for the first AMP apparatus. For example, the second AMP apparatus sends a WPT signal to the first AMP apparatus.

In an example, as shown in FIG. 5b, the AP may send a WPT signal to the AMP STA through a WPT link. Continuous transmission duration shown in FIG. 5b to FIG. 5d is continuous transmission duration of the WPT signal. FIG. 5b to FIG. 5d show examples of the continuous transmission duration of the WPT signal. The duration shown in the figures should not be understood as a limitation on embodiments of this application. A process of transmitting a WPT signal by the second AMP apparatus shown in FIG. 5b to FIG. 5d may be referred to as a WPT procedure.

In another example, as shown in FIG. 5c, the relay node may send a WPT signal to the AMP STA through a WPT link.

In still another example, as shown in FIG. 5d, because a capability of interaction between the AP and the AMP STA is a capability of an energizer, the energizer provides RF energy for the AMP STA. Therefore, after the WPT setup phase is completed, the AP may send control information #1 to the energizer. The control information #1 may be included in a control frame, a management frame, or a data frame. For example, the control information #1 may be included in a trigger frame. For example, the control information #1 may be used to control (or trigger or activate) the energizer to send a WPT signal. In other words, the control information #1 may indicate the energizer to enter a WPT process (or referred to as a WPT procedure). For example, the control information #1 may include 1 bit, and the 1 bit may indicate whether to trigger the energizer to start to send the WPT signal. For another example, the control information #1 may include 1 bit, and the 1 bit may indicate to stop sending the WPT signal or start to send the WPT signal. For another example, the control information #1 may be included in a data frame or a control frame. For example, the control information #1 may indicate a transmission time of a WPT signal. For example, the control information #1 may indicate a sending periodicity of the WPT signal, indicate a transmission start time and a transmission end time of the WPT signal, or indicate continuous transmission duration of the WPT signal. A specific form of the control information #1 is not enumerated herein. For example, the WPT setup response shown in this embodiment of this application may also include the control information #1, or the WPT setup response and the control information #1 are included in a same trigger frame. For example, the AP may also indicate a transmission time of the WPT signal to the AMP STA, or indicate an activation indication of the WPT signal to the AMP STA. The control information shown in this embodiment of this application may also be referred to as WPT control. For example, the control information #1 may be referred to as WPT control #1, and control information #2 may be referred to as WPT control #2. Examples are not enumerated herein.

When the WPT setup procedure indicates that setup of the WPT procedure fails, the second AMP apparatus cannot provide RF energy for the first AMP apparatus. When setup of the current WPT procedure fails, if the first AMP apparatus is still associated with the third AMP apparatus, when the first AMP apparatus needs to re-set up the WPT procedure, the first AMP apparatus may re-initiate a WPT setup request, or the third AMP apparatus may re-initiate a WPT setup request. When the association between the first AMP apparatus and the third AMP apparatus is disconnected, the first AMP apparatus needs to re-set up an association with the third AMP apparatus, and perform a WPT capability exchange phase, a WPT setup phase, and the like.

503. WPT report (WPT report) phase.

The WPT report phase may be a report phase of a WPT procedure, for example, may include a WPT report procedure. The WPT report procedure may be used to feed back information in the WPT procedure, or feed back information in a WPT process. For example, the WPT report procedure may be used to feed back at least one of a WPT status or WPT power control information.

In an example, an initiator of the WPT report procedure may be the third AMP apparatus. For example, the third AMP apparatus may send a WPT report request (WPT report request) (WPT report requests indicated by dashed-line parts in FIG. 5b to FIG. 5d) to the first AMP apparatus. The WPT report request may be used to request WPT status information and the like of the first AMP apparatus in a power transfer process. The first AMP apparatus may return a WPT report (WPT report). For example, the third AMP apparatus may send the WPT report request in a process in which the first AMP apparatus receives a WPT signal, so that the third AMP apparatus can timely learn of a status of receiving the WPT signal by the first AMP apparatus. For example, the third AMP apparatus may predict, based on a temperature or a voltage reported by the first AMP apparatus, whether the temperature or the voltage rises to a threshold in a future period of time. For another example, the third AMP apparatus may adjust a transmit power based on WPT power control information reported by the first AMP apparatus.

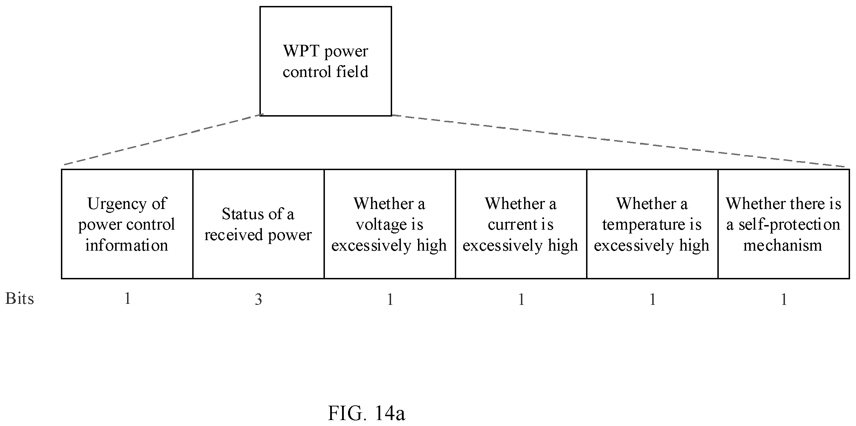

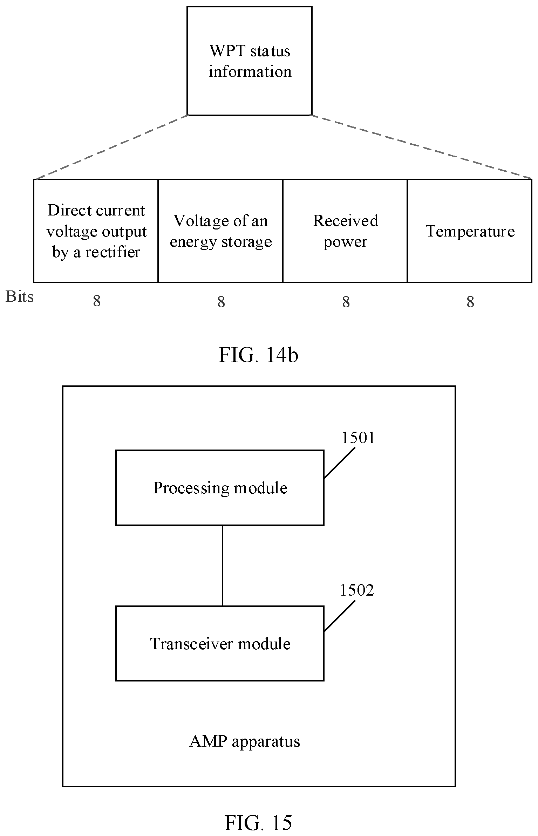

In another example, an initiator of the WPT report procedure may be the first AMP apparatus. For example, the first AMP apparatus may directly send a WPT report to the third AMP apparatus. The first AMP apparatus may directly send the WPT report without waiting for the third AMP apparatus to send the WPT report request. For example, the first AMP apparatus may send the WPT report when detecting a WPT alert or when the first AMP apparatus is fully charged. Therefore, the first AMP apparatus may send the WPT report to implicitly indicate the third AMP apparatus to control the second AMP apparatus to stop sending the WPT signal (as shown in FIG. 5d), or implicitly indicate the second AMP apparatus to stop sending the WPT signal (as shown in FIG. 5b or FIG. 5c), to protect a circuit of the first AMP apparatus, save resources used to transmit the WPT signal, and reduce power consumption of the second AMP apparatus. For other descriptions of the WPT report request and the WPT report, refer to FIG. 14a and FIG. 14b. Details are not described herein again.

504. WPT teardown (WPT teardown) phase.

The WPT teardown phase means that a current WPT procedure needs to be stopped or needs to be terminated, for example, may include a WPT teardown procedure. The WPT teardown procedure may also be referred to as a WPT termination procedure or the like. The name is not limited in embodiments of this application.

In an example, when a WPT status indicated by the WPT report in the WPT report phase is a preset state, the WPT report may also implicitly indicate that the WPT procedure is torn down. The preset state shown herein may include but is not limited to an alert state, a fully charged state, or the like.

In another example, an initiator of the WPT teardown procedure may be the third AMP apparatus. For example, the third AMP apparatus may send WPT teardown (or referred to as a termination indication or the like) (WPT teardown indicated by dashed-line parts in FIG. 5b to FIG. 5d). The WPT teardown may indicate to tear down a WPT procedure, terminate a WPT procedure, or tear down a WPT process. The WPT teardown procedure initiated by the third AMP apparatus through a teardown indication explicitly indicates that the WPT procedure is torn down.

FIG. 5d is used as an example. When the control information #1 indicates a transmission time of a WPT signal, the energizer may automatically stop sending the WPT signal based on the transmission time. In another example, in the WPT teardown phase or after the WPT teardown phase, the AP may send control information #2 to the energizer, where the control information #2 may be included in a control frame, a management frame, or a data frame. The control information #2 may be used to control the energizer to stop sending the WPT signal. For example, the control information #2 may be included in a trigger frame. For example, the control information #2 may include 1 bit, and the 1 bit may indicate whether to trigger the energizer to stop sending the WPT signal. In other words, the control information #2 may indicate the energizer to stop a WPT process (or referred to as a WPT procedure). For example, the control information #2 may include 1 bit, and the 1 bit may indicate to stop sending the WPT signal or start to send the WPT signal. For example, a value of the 1 bit in the control information #1 may be 1 indicating to start sending the WPT signal, and a value of the 1 bit in the control information #2 may be 0 indicating to stop sending the WPT signal. For descriptions of the control information #2, refer to the descriptions of the control information #1. Details are not described herein again. For example, the WPT teardown may also include the control information #2, or the WPT teardown and the control information #2 may be included in a same trigger frame. For example, the AP may indicate a WPT signal transmission stop indication to the AMP STA.

After the current procedure is torn down, if the first AMP apparatus is still associated with the third AMP apparatus, when the first AMP apparatus needs to re-set up the WPT procedure, the first AMP apparatus may re-initiate a WPT setup request, or the third AMP apparatus may re-initiate a WPT setup request. After the current procedure is torn down, if the association between the first AMP apparatus and the third AMP apparatus is disconnected, the first AMP apparatus needs to re-set up an association with the third AMP apparatus, and perform a WPT capability exchange phase, a WPT setup phase, and the like.

In embodiments of this application, an interaction procedure in the WPT process is improved, and steps to be performed by each apparatus are refined, thereby effectively improving interaction efficiency between the apparatuses.

The following describes in detail phases in embodiments of this application.

FIG. 6 is a schematic flowchart of a wireless power transfer method according to an embodiment of this application. As shown in FIG. 6, the method includes:

In a possible implementation, the method shown in FIG. 6 may include step 601.

601. A first AMP apparatus sends the first capability indication information to a third AMP apparatus; and correspondingly, the third AMP apparatus receives the first capability indication information.

The following first describes a form of a parameter indicated by the first capability indication information, and then describes parameter content indicated by the first capability indication information. For ease of description, when a specific example is used below, a first parameter is used as an example to describe the form of the parameter indicated by the first capability indication information. Descriptions of an indication form of the first parameter are also applicable to another parameter indicated by the first capability indication information.

In an example, the first capability indication information may indicate a value of the first parameter in an index manner (or referred to as a mapping relationship). A quantity of bits occupied by the first parameter may be related to different values of the first parameter. For example, if a quantity of bits occupied by the first parameter is m, the m bits may represent 2^{m} values of the first parameter, where m may be a positive integer. For example, if m=2, 0 may represent a first parameter #1, 1 may represent a first parameter #2, 2 may represent a first parameter #3, and 3 may represent a first parameter #4. "0 to 3" shown herein are shown by using decimal as an example, but this should not be construed as a limitation on embodiments of this application. In a specific implementation, different values may be represented by using binary. Examples are not enumerated herein.

In another example, the first capability indication information may indicate a value of the first parameter in a bitmap manner. A quantity of bits occupied by the first parameter is still related to different values of the first parameter. For example, if the quantity of bits occupied by the first parameter is m, the m bits may represent m values of the first parameter. Each bit may correspond to one value. For example, if a value of one bit is 1, it may indicate that the value of the first parameter is a value corresponding to the bit. For example, if m=3 and a bitmap is 010, the value of the first parameter may be a value corresponding to a bit "1".

In this embodiment of this application, all parameters indicated by the first capability indication information may be in a same indication form, or at least two parameters may have different indication forms. This is not limited in embodiments of this application. The parameters indicated by the first capability indication information may occupy a same quantity of bits, or at least two parameters may occupy different quantities of bits. This is not limited in embodiments of this application. Indication forms of parameters and quantities of bits occupied by fields shown below are merely examples. This embodiment of this application is not limited thereto.

The following describes the parameter content indicated by the first capability indication information.

The first capability indication information includes at least one of the following: a frequency band supported by the first AMP apparatus, a bandwidth supported by the first AMP apparatus, or a WPT waveform supported by the first AMP apparatus.

(1A) The frequency band supported by the first AMP apparatus may indicate a frequency band on which the WPT signal received by the first AMP apparatus is located or a frequency band on which the first AMP apparatus may support receiving of the WPT signal, or indicate a frequency band for transmitting the WPT signal. For example, the frequency band supported by the first AMP apparatus may be carried in a WPT frequency support (WPT frequency support) field. For example, the WPT frequency support field may occupy 2 bits. For example, a relationship between a value and a meaning of the field may be shown as follows: 0 indicates that a frequency band is sub-1 GHz, 1 indicates that a frequency band is 2.4 GHz, 2 indicates that a frequency band can be sub-1 GHz or 2.4 GHz (that is, 2 indicates that both sub-1 GHz and 2.4 GHz are supported), and 3 is a reserved value. With progress of the standard, the WPT signal may subsequently support more frequency bands. In this case, the WPT frequency support field may further occupy more bits.

Relationships between values and meanings of the fields enumerated in embodiments of this application are merely examples, and should not be construed as a limitation on embodiments of this application. Names of the fields enumerated in embodiments of this application are merely examples, and should not be construed as a limitation on embodiments of this application. Similarly, quantities of bits occupied by the fields are also examples. With progress of the standard, each parameter may support more or fewer different values, that is, a field carried in each parameter may also occupy more or fewer bits. This is not limited in embodiments of this application.

For example, if a value of the WPT frequency support field is 1 (which is 01 in binary), it indicates that the first AMP apparatus may support receiving of a WPT signal on 2.4 GHz. An index manner is used as an example herein for description. For example, the frequency band supported by the first AMP apparatus may also be indicated in a bitmap manner. The foregoing relationship is still used as an example. The WPT frequency support field may occupy 3 bits. For example, a 1^{st} bit may indicate whether the first AMP apparatus supports receiving of a WPT signal on a sub-1 GHz frequency band, a 2^{nd} bit may indicate whether the first AMP apparatus supports receiving of a WPT signal on a 2.4 GHz frequency band, and a 3^{rd} bit may be a reserved value. For example, if the WPT frequency support field is 010, it indicates that the first AMP apparatus may support receiving of a WPT signal on a 2.4 GHz frequency band. For another example, if the WPT frequency support field is 110, it indicates that the first AMP apparatus may support receiving of a WPT signal on a 2.4 GHz frequency band, and may also support receiving of a WPT signal on a sub-1 GHz frequency band. Another parameter may also be indicated in a bitmap manner. Examples are not enumerated below.

In this embodiment of this application, when the frequency band supported by the first AMP apparatus is different from a frequency band supported by the second AMP apparatus, even if the second AMP apparatus sends a WPT signal to the first AMP apparatus, the first AMP apparatus cannot receive the WPT signal. Therefore, in the WPT capability exchange phase, the first AMP apparatus indicates the frequency band supported by the first AMP apparatus, so that the third AMP apparatus can correctly determine whether the first AMP apparatus can successfully receive the WPT signal, thereby improving communication efficiency.

(2A) The bandwidth supported by the first AMP apparatus may indicate a bandwidth of a channel on which the WPT signal received by the first AMP apparatus is located, or a channel bandwidth of the WPT signal. Because a link used to transmit the WPT signal is a WPT link, the bandwidth supported by the first AMP apparatus may also indicate a channel bandwidth of the WPT link. For example, the bandwidth supported by the first AMP apparatus may be carried in a WPT bandwidth (WPT bandwidth) field.

In an example, the WPT link may have the same channel division as a communication link. For example, a center frequency of the channel bandwidth of the WPT link is the same as a center frequency of a channel bandwidth of the communication link. In another example, the WPT link may have a different channel division from a communication link. For example, a center frequency of the channel bandwidth of the WPT link may be different from a center frequency of a channel bandwidth of the communication link.

For example, the WPT bandwidth field may occupy 3 bits. For example, a relationship between a value and a meaning of the field may be shown as follows: 0 represents 1 MHz, 1 represents 2 MHz, 2 represents 4 MHz, 3 represents 8 MHz, 4 represents 16 MHz, and 5 to 7 are reserved values. With progress of the standard, the WPT link may subsequently support more frequency bands. In this case, a channel bandwidth division manner may also change accordingly. This is not limited in embodiments of this application.

In this embodiment of this application, when the channel bandwidth supported by the first AMP apparatus does not match a channel bandwidth supported by the second AMP apparatus, a power of the WPT signal received by the first AMP apparatus is unstable. Therefore, in the WPT capability exchange phase, power stability of the WPT signal can be ensured by exchanging the channel bandwidth supported by each of the first AMP apparatus and the second AMP apparatus.

(3A) The WPT waveform supported by the first AMP apparatus may indicate a modulation scheme used to generate the WPT signal received by the first AMP apparatus, or a modulation scheme used by the WPT signal. For example, the WPT waveform supported by the first AMP apparatus may be carried in a WPT modulation (WPT modulation) field. For example, the WPT modulation field may occupy 3 bits. For example, a relationship between a value and a meaning of the field may be shown as follows: 0 represents a frequency modulated continuous wave (frequency modulated continuous wave, FMCW), 1 represents a direct sequence spread spectrum (direct sequence spread spectrum, DSSS), 2 represents a frequency-hopping spread spectrum (frequency-hopping spread spectrum, FHSS), 3 represents a time hopping spread spectrum (time hopping spread spectrum, THSS), 4 represents a chirp spread spectrum (chirp spread spectrum, CSS), 5 represents orthogonal frequency division (Orthogonal Frequency Division Multiplexing, OFDM), and 6 and 7 are reserved values. For example, if a value of the WPT modulation field is 0, it indicates that the first AMP apparatus may support a WPT signal modulated in an FMCW modulation scheme. After receiving the WPT signal, the first AMP apparatus converts the WPT signal into a direct current signal through a rectifier. The modulation scheme supported by the first AMP apparatus may be one or more of the foregoing enumerated modulation schemes, or may include another modulation scheme or the like that appears subsequently. This is not limited in embodiments of this application. Certainly, when the first AMP apparatus may support all the modulation schemes, the WPT modulation field may not appear. Similarly, when the second AMP apparatus supports all the modulation schemes, second capability indication information sent by the second AMP apparatus may not include a WPT modulation field, that is, default of the WPT modulation field indicates that all the modulation schemes are supported.

In this embodiment of this application, when the WPT waveform supported by the first AMP apparatus is inconsistent with a WPT waveform supported by the second AMP apparatus, the first AMP apparatus cannot convert the received WPT signal into a direct current signal through a rectifier, and therefore the WPT signal cannot provide RF energy for the first AMP apparatus.

FIG. 7a is a diagram of a format of first capability indication information according to an embodiment of this application. Quantity of bits occupied by fields and positions (or referred to as a sequence) of the fields shown in FIG. 7a are merely examples, and should not be construed as a limitation on embodiments of this application. Descriptions of the quantities of bits and the positions are also applicable to formats shown below.

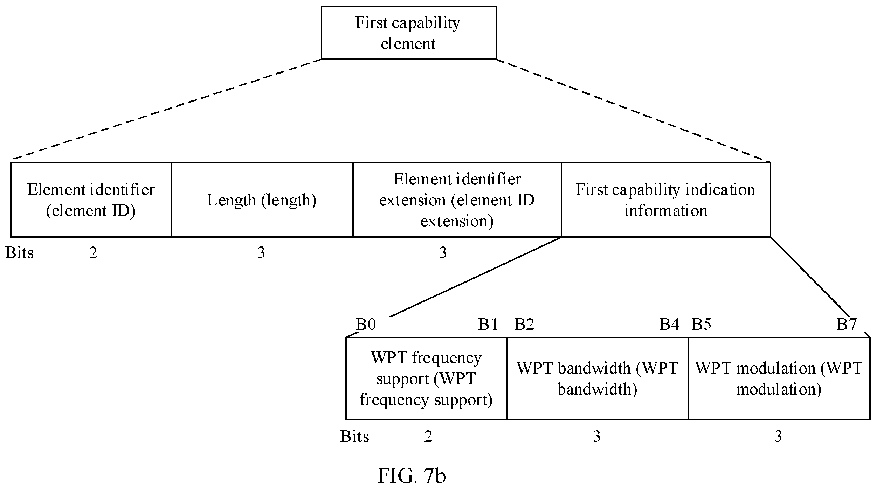

For example, the first capability indication information may be carried in a first capability element. FIG. 7b is a diagram of a format of a first capability element according to an embodiment of this application. As shown in FIG. 7b, the first capability element may include an element identifier (element ID), a length (length), an element identifier extension (element ID extension), and first capability indication information. The element identifier field and the element identifier extension field may identify the first capability element. The length field may indicate a length of the first capability element.

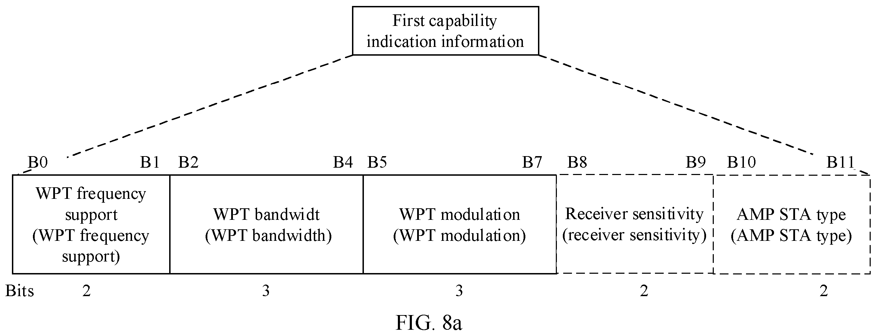

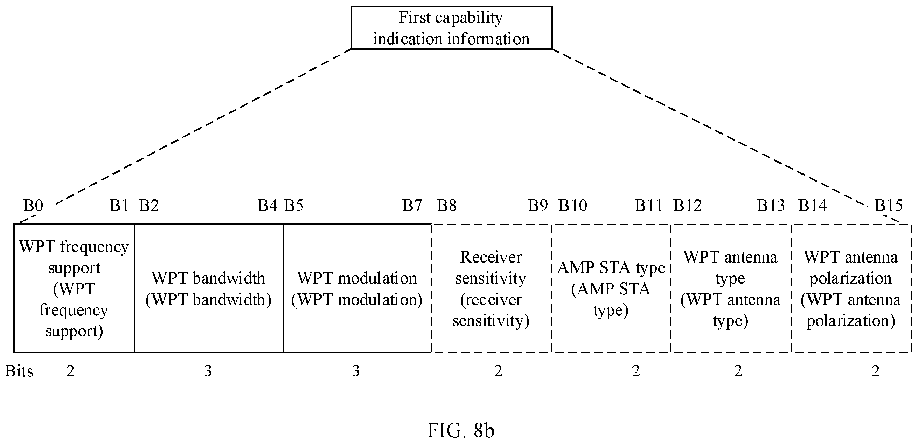

For example, the first capability element may further include a present (present) field (not shown in FIG. 7a to FIG. 7c), and the present field may indicate a field that appears in the first capability indication information. For example, the present field may indicate, in a bitmap manner, a field that appears in the first capability indication information. In an example, a quantity of bits occupied by the present field may be equal to a maximum quantity of fields that can be carried in the first capability indication information. FIG. 7b is used as an example. The present field may occupy 3 bits. For example, a 1^{st} bit may indicate whether the WPT frequency support field appears, a 2^{nd} bit may indicate whether the WPT bandwidth field appears, and a 3^{rd} bit may indicate whether the WPT modulation field appears. In another example, a quantity of bits occupied by the present field may be equal to a fixed value. For example, the quantity of bits occupied by the present field may be equal to a quantity of optional fields in the first capability element. Fields shown in dashed-line parts in FIG. 8a or FIG. 8b below may be optional fields.

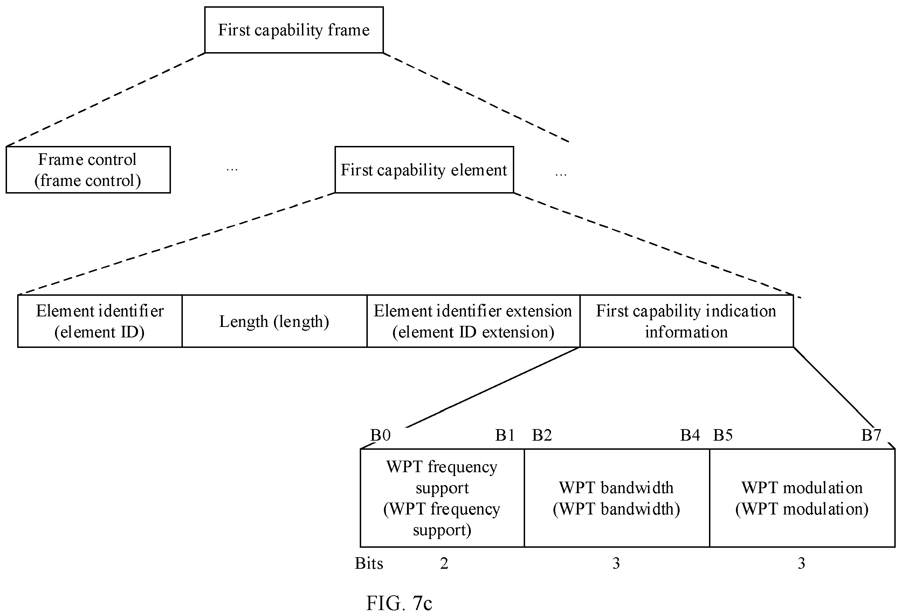

For example, the first capability element may be carried in a first capability frame. FIG. 7c is a diagram of a format of a first capability frame according to an embodiment of this application. As shown in FIG. 7c, the first capability frame may include a frame control (frame control) and a first capability element. The frame control field may identify a type of the first capability frame. For example, the type of the first capability frame may be a management frame, a control frame, or a data frame. Another field in the first capability frame is not limited in embodiments of this application.

In an example, the first capability frame may be a probe request (probe request) frame. In another example, the first capability frame may be an association request (association request) frame. A specific frame name of the first capability frame is not described in detail herein.

FIG. 7b and FIG. 7c show examples of three parameters included in the first capability indication information. As shown below, the first capability indication information may further indicate more parameters. When the first capability indication information indicates more parameters, the first capability indication information is also applicable to the formats shown in FIG. 7b and FIG. 7c. Examples are not enumerated below.

Further, the first capability indication information may include at least one of the following: a receive power sensitivity of the first AMP apparatus or a type of the first AMP apparatus.

(4A) The receive power sensitivity of the first AMP apparatus may indicate a receive power threshold when the first AMP apparatus receives the WPT signal, may indicate a minimum receive power when the first AMP apparatus receives the WPT signal, or may indicate a maximum receive power (maximum receive power) when the first AMP apparatus receives the WPT signal. The maximum receive power may be used by the AP to determine, when a WPT signal is transmitted based on a fixed EIRP (for example, WPT EIRP Changeable=0 below) or a minimum EIRP (for example, WPT EIRP Changeable=1 below), whether a power of the WPT signal after the WPT signal reaches the first AMP apparatus exceeds the maximum receive power that can be borne by the first AMP apparatus. If the power exceeds the maximum receive power, circuit breakdown may be caused.

For example, the receive power sensitivity of the first AMP apparatus may be carried in a receiver sensitivity (receiver sensitivity) field. For example, the receiver sensitivity field may occupy 2 bits. For example, a relationship between a value and a meaning of the field may be shown as follows: 0 represents -20 dBm, 1 represents -30 dBm, 2 represents -45 dBm, and 3 represents -90 dBm. For example, if the value of the receiver sensitivity field is 0, it indicates that the receive power threshold when the first AMP apparatus receives the WPT signal is -20 dBm. When the receive power of the WPT signal is less than the threshold, the WPT signal cannot energize the first AMP apparatus, or the first AMP apparatus cannot detect the WPT signal. \For another example, a relationship between a value and a meaning of the field may be shown as follows: 0 represents 0.01 mW, 1 represents 0.001 mW, 2 represents 0.000031 mW, and 3 represents 1e-9 mW. The value of the receiver sensitivity enumerated herein is merely an example, and should not be construed as a limitation on embodiments of this application.

As shown in FIG. 5a above, the first AMP apparatus may also report the WPT status in the WPT report phase. Therefore, the receiver sensitivity field may not appear, for example, the WPT report indicates whether the second AMP apparatus increases a transmit power of the WPT signal.

In this embodiment of this application, when the receive power sensitivity of the first AMP apparatus does not match a transmit power of the second AMP apparatus, for example, the second AMP apparatus transmits the WPT signal at a transmit power, and then a receive power of the WPT signal is lower than the receive power sensitivity of the first AMP apparatus when the WPT signal reaches the first AMP apparatus after signal attenuation, the first AMP apparatus cannot detect the WPT signal, and therefore RF energy cannot be provided for the first AMP apparatus. Generally, a higher receive power sensitivity of the first AMP apparatus indicates a higher transmit power needed by the second AMP apparatus.

(5A) The type of the first AMP apparatus may indicate that the type of the first AMP apparatus is a type A, a type B, or a type C. For example, the type of the first AMP apparatus may be carried in an AMP STA type (AMP STA type) field. For example, the AMP STA type field may occupy 2 bits. For example, a relationship between a value and a meaning of the field may be shown as follows: 0 represents a type A, which is compatible with a conventional Wi-Fi device; 1 represents a type B, which is a low-power device that is not compatible with a conventional Wi-Fi device (for example, a Wi-Fi device supporting the 802.11b/g/n protocol); 2 represents a type C that supports backscatter; and 3 represents a reserved value.

In this embodiment of this application, different types of devices may correspond to different receiver sensitivities, or different types of devices may indicate an energy storage capability of a device battery. For example, the first capability indication information may include one of the receiver sensitivity field and the AMP STA type field. Certainly, the first capability indication information may also include both the two fields.

FIG. 8a is a diagram of another format of first capability indication information according to an embodiment of this application. For descriptions of each field in FIG. 8a, refer to (1A) to (5A). Details are not described herein again. Similarly, the first capability indication information may also be carried in an element shown in FIG. 7b, or in a frame shown in FIG. 7c. Examples are not enumerated herein.

Further, the first capability indication information may include at least one of the following: an antenna type of the first AMP apparatus or an antenna polarization manner of the first AMP apparatus.

(6A) The antenna type of the first AMP apparatus may indicate an antenna type used by the first AMP apparatus to receive a WPT signal. For example, the antenna type of the first AMP apparatus may be carried in a WPT antenna type (WPT antenna type) field. For example, the WPT antenna type field may occupy 2 bits. For example, a relationship between a value and a meaning of the field may be shown as follows: 0 represents an omnidirectional antenna, 1 represents a directional antenna, 2 represents a smart antenna, for example, the smart antenna may support both an omnidirectional antenna and a directional antenna, and 3 is a reserved value. For another example, when an antenna capability of the first AMP STA is relatively weak, there is no case in which a smart antenna is supported. In this case, a relationship between a value and a meaning of the WPT antenna type field may be shown as follows: 0 represents an omnidirectional antenna, 1 represents a directional antenna, and 2 and 3 are reserved values.

In this embodiment of this application, different antenna types need different powers to send a same signal. Therefore, the first AMP apparatus can send the antenna type of the first AMP apparatus, and use the antenna type as a reference for capability information.

(7A) The antenna polarization manner of the first AMP apparatus may indicate an antenna polarization manner used by the first AMP apparatus to receive a WPT signal. For example, the antenna polarization of the first AMP apparatus may be carried in a WPT antenna polarization (WPT antenna polarization) field. For example, the WPT antenna polarization field may occupy 2 bits. For example, a relationship between a value and a meaning of the field may be shown as follows: 0 indicates linear polarization, 1 indicates circular polarization, 2 indicates that both linear polarization and circular polarization are supported, and 3 is a reserved value.

In this embodiment of this application, when the antenna type of the first AMP apparatus does not match an antenna type of the second AMP apparatus, for example, the antenna type of the first AMP apparatus is circular polarization, and the antenna type of the second AMP apparatus is linear polarization, low transmission efficiency of the WPT signal is caused. Therefore, transmission efficiency of the WPT signal can be improved by exchanging the antenna polarization manner.

FIG. 8b is a diagram of still another format of first capability indication information according to an embodiment of this application. For descriptions of each field in FIG. 8b, refer to (1A) to (7A). Details are not described herein again. Similarly, the first capability indication information may also be carried in an element shown in FIG. 7b, or in a frame shown in FIG. 7c. Examples are not enumerated herein.

In a possible implementation, the method shown in FIG. 6 may further include step 602.

602. The third AMP apparatus sends second capability indication information to the first AMP apparatus; and correspondingly, the first AMP apparatus receives the second capability indication information.

For a parameter form indicated by the second capability indication information, refer to the foregoing descriptions of the parameter form indicated by the first capability indication information. Details are not described herein again.

The following describes parameter content indicated by the second capability indication information.

The second capability indication information may include at least one of the following: a frequency band supported by the second AMP apparatus, a bandwidth supported by the second AMP apparatus, or a WPT waveform supported by the second AMP apparatus.
(1B) The frequency band supported by the second AMP apparatus may indicate a frequency band on which the WPT signal sent by the second AMP apparatus is located or a frequency band on which the second AMP apparatus may support sending of the WPT signal, or indicate a frequency band for transmitting the WPT signal. For example, the frequency band supported by the second AMP apparatus may be carried in a WPT frequency support field. For descriptions of the field, refer to (1A). Examples are not enumerated herein.
(2B) The bandwidth supported by the second AMP apparatus may indicate a bandwidth of a channel on which the WPT signal sent by the second AMP apparatus is located, or a channel bandwidth of the WPT signal. For descriptions of the bandwidth supported by the second AMP apparatus, refer to (2A). Examples are not enumerated herein again.
(3B) The WPT waveform supported by the second AMP apparatus may indicate a modulation scheme of the WPT signal sent by the second AMP apparatus. For descriptions of the WPT waveform supported by the second AMP apparatus, refer to (3A). Examples are not enumerated herein.

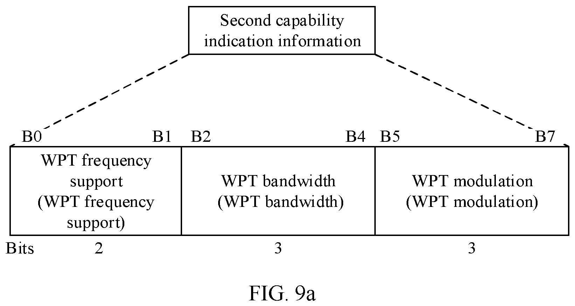

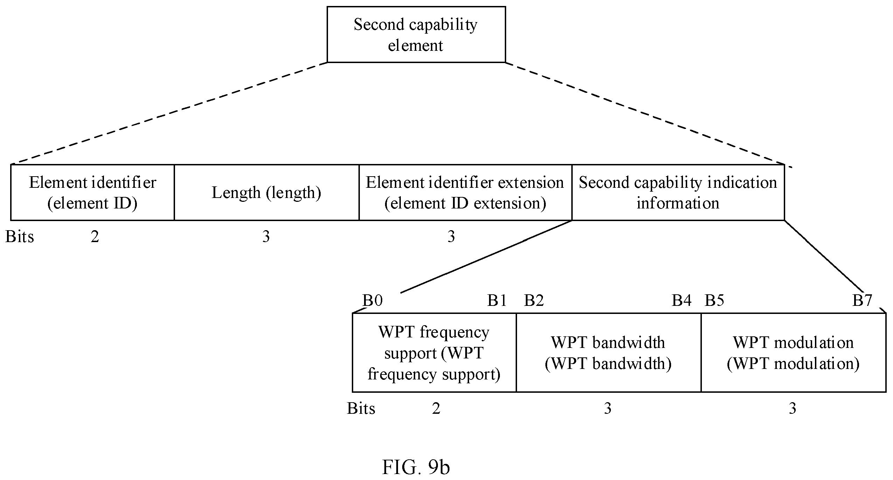

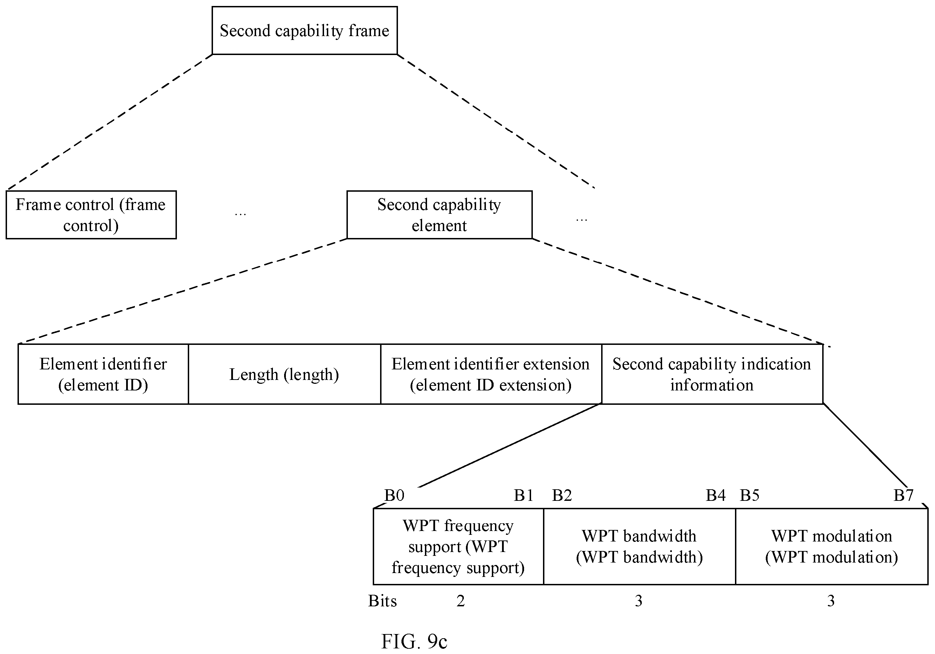

FIG. 9a is a diagram of a format of second capability indication information according to an embodiment of this application. FIG. 9b is a diagram of a format of a second capability element according to an embodiment of this application. FIG. 9c is a diagram of a format of a second capability frame according to an embodiment of this application. For example, the second capability frame may be a beacon (beacon) frame, a probe response (probe response) frame, or an association response (association response) frame. The second capability element may also include a present field. For descriptions of the present field, refer to descriptions in FIG. 7a to FIG. 7c. Details are not described herein again. For descriptions of FIG. 9a to FIG. 9c, refer to FIG. 7a to FIG. 7c or (1B) to (3B). Details are not described herein again.

Further, the second capability indication information may include at least one of the following: whether an effective/equivalent isotropic radiated power (effective/equivalent isotropic radiated power, EIRP) of the second AMP apparatus is adjustable or an EIRP of the second AMP apparatus.

(4B) Whether the EIRP of the second AMP apparatus is adjustable may indicate whether a transmit power of the second AMP apparatus can be adjusted. Whether the EIRP of the second AMP apparatus is adjustable may be carried in a WPT EIRP adjustable field. For example, the WPT EIRP changeable field may occupy 1 bit. For example, a relationship between a value and a meaning of the field may be shown as follows: 0 indicates nonadjustable, and 1 indicates adjustable.

In this embodiment of this application, if the EIRP of the second AMP apparatus is adjustable, when learning of the type or the receive power sensitivity of the first AMP apparatus, the second AMP apparatus may adjust the transmit power of the WPT signal based on a receiving capability of the first AMP apparatus, to ensure that the first AMP apparatus can detect the WPT signal, and the first AMP apparatus can complete RF energy harvesting. If the EIRP of the second AMP apparatus is nonadjustable, the second AMP apparatus needs to transmit the WPT signal at a fixed transmit power. Therefore, whether the first AMP apparatus can detect the WPT signal needs to be determined based on the receive power sensitivity of the first AMP apparatus and the transmit power of the second AMP apparatus. For descriptions of (4B), refer to (4A). Examples are not enumerated herein.

(5B) The EIRP of the second AMP apparatus may indicate a transmit power (Tx power) or a receive power of the second AMP apparatus. The EIRP of the second AMP apparatus may be carried in a WPT EIRP field.

In an example, when the EIRP of the second AMP apparatus is nonadjustable, the WPT EIRP field may indicate a fixed transmit power of the second AMP apparatus. In another example, when the EIRP of the second AMP apparatus is adjustable, the WPT EIRP field may indicate a maximum transmit power of the second AMP apparatus. In still another example, when the EIRP of the second AMP apparatus is adjustable, the WPT EIRP field may indicate a minimum receive power of the second AMP apparatus. If the WPT signal is transmitted at the minimum transmit power, and the WPT signal still exceeds the maximum receive power of the first AMP apparatus when reaching the first AMP apparatus, the first AMP apparatus may not initiate a WPT setup request.

For example, the WPT EIRP field may occupy 2 bits. A relationship between a value and a meaning of the field may be shown as follows: 0 represents 1W, 1 represents 2W, 2 represents 3W, and 3 represents 4W. For another example, a relationship between a value and a meaning of the field may be shown as follows: 0 represents 0.2W, 1 represents 0.4W, 2 represents 0.6W, and 3 represents 0.8W.

For descriptions of (5B), refer to (5A) or (4A). Examples are not enumerated herein.

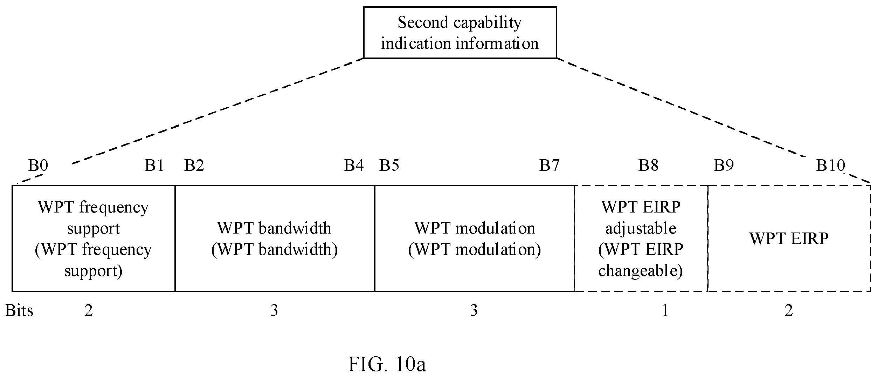

FIG. 10a is a diagram of another format of second capability indication information according to an embodiment of this application. For descriptions of each field in FIG. 10a, refer to (1B) to (5B). Details are not described herein again. Similarly, the second capability indication information may also be carried in an element shown in FIG. 9b, or in a frame shown in FIG. 9c. Examples are not enumerated herein.

Further, the second capability indication information may include at least one of the following: an antenna type of the second AMP apparatus or an antenna polarization manner of the second AMP apparatus.
(6B) The antenna type of the second AMP apparatus may indicate an antenna type used by the second AMP apparatus to send a WPT signal. For example, the antenna type of the second AMP apparatus may be carried in a WPT antenna type (WPT antenna type) field. For descriptions of the field, refer to (6A). Examples are not enumerated herein.
(7B) The antenna polarization manner of the second AMP apparatus may indicate an antenna polarization manner used by the second AMP apparatus to send a WPT signal. For example, the antenna polarization of the second AMP apparatus may be carried in a WPT antenna polarization (WPT antenna polarization) field. For descriptions of the field, refer to (7A). Examples are not enumerated herein.

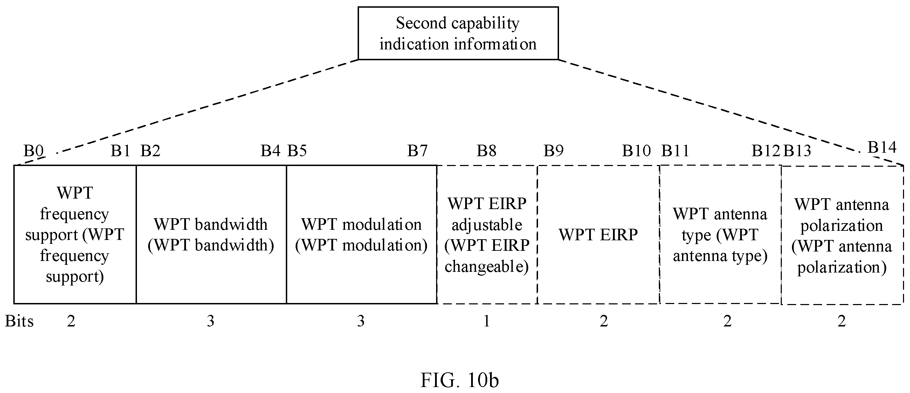

FIG. 10b is a diagram of still another format of second capability indication information according to an embodiment of this application. For descriptions of each field in FIG. 10b, refer to (1B) to (7B) and the like. Details are not described herein again.

Further, the second capability indication information may include at least one of the following: an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

(8B) The antenna azimuth of the second AMP apparatus may indicate an azimuth of an antenna (for example, which may be referred to as a WPT antenna) used by the second AMP apparatus to send a WPT signal. For example, the antenna azimuth of the second AMP apparatus may be carried in a WPT antenna azimuth (WPT antenna azimuth) field. For example, the WPT antenna azimuth field may occupy 6 bits. For example, a relationship between a value and a meaning of the field may be shown as follows: 0 represents 10°; 1 represents 20°; ...; 35 represents 360°; and 36 to 63 are reserved. In a specific implementation, an actual antenna azimuth may be quantized to the foregoing value, and a quantization manner may be rounding down, rounding up, rounding off, or the like. For example, an actual antenna angle is 21°, and may be quantized to 20° in a round-off manner. The WPT antenna azimuth field may be represented by 1. For another example, the WPT antenna azimuth field may occupy 9 bits. For example, a relationship between a value and a meaning of the field may be shown as follows: 0 represents 0°; 1 represents 1°; ...; 359 represents 359°; and 360 to 511 are reserved values. A division manner herein is merely an example, but should not be construed as a limitation on this embodiment of this application.

In this embodiment of this application, the second AMP apparatus indicates an antenna orientation, an antenna elevation, a bandwidth of an antenna beam, or a height of an antenna beam to the first AMP apparatus, so that the first AMP apparatus can learn of a radiation range of an antenna based on the information. Therefore, the first AMP apparatus can learn whether the first AMP apparatus is within a radiation range of the second AMP apparatus. If the first AMP apparatus is not within the radiation range, transmission efficiency is very low, and the first AMP apparatus may not initiate a WPT setup request. For descriptions of the antenna elevation, the bandwidth of the antenna beam, and the height of the antenna beam, refer to the following descriptions.
(9B) The antenna elevation of the second AMP apparatus may indicate an elevation of an antenna used by the second AMP apparatus to send a WPT signal. For example, an elevation range of the antenna may be -90° to 90°. For example, the antenna elevation of the second AMP apparatus may be carried in a WPT antenna elevation (WPT antenna elevation) field. For example, the field may occupy 5 bits. For example, a relationship between a value and a meaning of the field may be shown as follows: 0 represents -90°; 1 represents -80°; ...; 17 represents 80°; 18 represents 90°; and 19 to 31 are reserved values. For another example, the field may occupy 8 bits. For example, a relationship between a value and a meaning of the field may be shown as follows: 0 represents -90°; 1 represents -89°; ...; 180 represents 90°; and 181 to 255 are reserved values. A division manner herein is merely an example, but should not be construed as a limitation on this embodiment of this application.
(10B) Whether the beam pattern of the second AMP apparatus is adjustable indicates whether an antenna used by the second AMP apparatus is changeable. For example, when the antenna type is a directional antenna, the beam pattern of the second AMP apparatus may indicate whether the antenna is changeable. For example, when the WPT antenna type field indicates that the antenna type of the second AMP apparatus is a directional antenna, the beam pattern of the second AMP apparatus is present, or may have a specific meaning. For example, the beam pattern of the second AMP apparatus may be carried in a WPT beam pattern changeable (WPT beam pattern changeable) field. For example, the field may occupy 1 bit. A relationship between a value and a meaning of the field may be shown as follows: In a directional antenna scenario, 0 indicates unchangeable, and 1 indicates changeable. If the WPT antenna type field indicates that the antenna type of the second AMP apparatus is an omnidirectional antenna, the field is a reserved field.
(11B) The beam pattern width of the second AMP apparatus may indicate a width of an antenna beam used by the second AMP apparatus. When the antenna type is a directional antenna, the beam pattern width of the second AMP apparatus may indicate a width of a WPT antenna beam. For example, the beam pattern width of the second AMP apparatus may be carried in a WPT beam pattern width (WPT beam pattern width) field. For example, the field may occupy 4 bits. A relationship between a value and a meaning of the field may be shown as follows: 0 represents 10°, 1 represents 20°, ..., and 15 represents 160°. For another example, the field may occupy 8 bits. For example, 0 to 159 respectively represent 1° to 160°, and 160 to 255 are reserved values. If the antenna type is an omnidirectional antenna, this field is reserved. A division manner herein is merely an example, but should not be construed as a limitation on this embodiment of this application.

In this embodiment of this application, if there are a relatively small quantity of first AMP apparatuses that need to be charged, the second AMP apparatus may send the WPT signal through a narrow beam. If there are a relatively large quantity of first AMP apparatuses that need to be charged, the second AMP apparatus may send the WPT signal through a wide beam. Therefore, the first AMP apparatus can be properly and effectively covered. (12B) The beam pattern height of the second AMP apparatus may indicate a height of an antenna beam used by the second AMP apparatus, for example, a height of a WPT antenna beam when an antenna type is a directional antenna. For example, the beam pattern height of the second AMP apparatus may be carried in a WPT beam pattern height (WPT beam pattern height) field. A design of this field may be the same as that of the WPT beam pattern width. Examples are not enumerated herein.

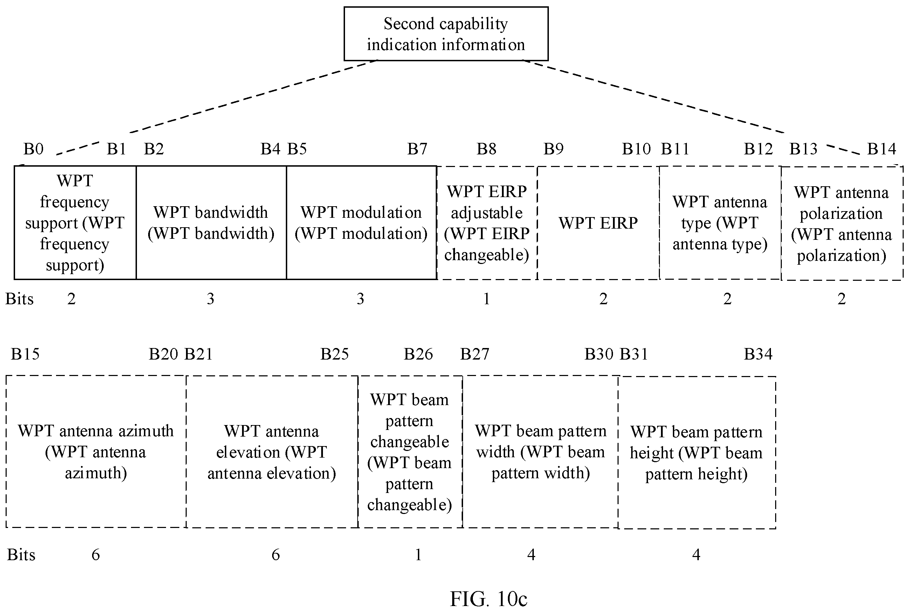

FIG. 10c is a diagram of still another format of second capability indication information according to an embodiment of this application. For descriptions of each field in FIG. 10c, refer to (1B) to (12B) and the like. Details are not described herein again.

A sequence of step 601 and step 602 is not limited in this embodiment of this application.

Optionally, after the capability exchange, the first AMP apparatus initiates a WPT setup procedure, as shown in step 603 in FIG. 6.

In a possible implementation, after sending the first capability indication information, the first AMP apparatus may initiate a WPT setup procedure. After receiving the first capability indication information, the second AMP apparatus may determine, based on a capability of the second AMP apparatus, whether to respond to the WPT setup procedure.

In another possible implementation, after receiving the second capability indication information, the first AMP apparatus may initiate a WPT setup procedure. For example, the first AMP apparatus may determine, based on the capability information of the second AMP apparatus, whether the second AMP apparatus can provide RF energy for the first AMP apparatus.

In still another possible implementation, after sending the first capability indication information and receiving the second capability indication information, the first AMP apparatus may initiate a WPT setup procedure.

When the first capability indication information matches the second capability indication information, the first AMP apparatus may initiate the WPT setup procedure. The matching shown in this embodiment of this application refers to matching between corresponding information, for example, whether (1A) matches (1B), whether (2A) matches (2B), whether (3A) matches (3B), whether (4A) (or (5A)) matches (5B), whether (6A) matches (6B), or whether (7A) matches (7B).

If (1A) and (3A) in the first capability indication information completely match (1B) and (3B) in the second capability indication information in a one-to-one manner, the first AMP apparatus may initiate a WPT setup procedure. Therefore, the first AMP apparatus initiates the WPT setup procedure after determining a capability of the first AMP apparatus and a capability of the second AMP apparatus, so that a success rate of the WPT setup procedure can be improved. If the first capability indication information does not match the second capability indication information, the first AMP apparatus does not initiate a WPT setup procedure, and may continue to wait for access of a next second AMP apparatus. For another example, the first AMP apparatus may determine whether the first AMP apparatus is within an effective radiation range of the second AMP apparatus, for example, determine, based on (8B) to (12B), whether the first AMP apparatus is within the effective radiation range. If the first AMP apparatus is within the effective radiation range, the first AMP apparatus may initiate a WPT setup procedure, to implement ranging, positioning, or the like on the second AMP apparatus.

In an example, when (1A) and (3A) in the first capability indication information do not completely match (1B) and (3B) in the second capability indication information, the first AMP apparatus may not initiate a WPT setup request, or the first AMP apparatus initiates a WPT setup request, but the third AMP apparatus rejects setup of a WPT procedure.

In another example, when (1A) to (3A) in the first capability indication information completely match (1B) to (3B) in the second capability indication information, the first AMP apparatus may send a WPT setup request, and the third AMP apparatus may determine, based on (4A) and (5A) in the first capability indication information and (4B) and (5B) in the second capability indication information, whether a WPT link can be successfully set up. For example, when the minimum receive power of (4A) in the first AMP apparatus is relatively high or (5A) in the first AMP apparatus is a type-C AMP STA, and the maximum transmit power of (5B) in the third AMP apparatus is relatively low, if the first AMP apparatus is relatively far away from the third AMP apparatus, the third AMP apparatus rejects setup of the WPT link; or if the first AMP apparatus is relatively close to the third AMP apparatus, the third AMP apparatus receives setup of the WPT link.

In still another example, when (1A) to (5A) in the first capability indication information and (1B) to (5B) in the second capability indication information all satisfy a condition that the first AMP apparatus can send a WPT setup request, the first AMP apparatus sends the WPT setup request, and the third AMP apparatus may switch a type and a polarization manner of the third AMP apparatus based on (6A) and (7A) in the first capability indication information. For example, the AMP STA supports only circular polarization, and the AP may support circular polarization and linear polarization. In this case, in a subsequent WPT procedure, the AP may select circular polarization to transmit a WPT signal. To be specific, the third AMP apparatus can adapt to the first AMP apparatus based on (6B) and (7B) in the second capability indication information. Otherwise, the third AMP apparatus may reject setup of the WPT link.

In yet another example, when the first AMP apparatus determines, based on (8B) to (12B) in the second capability indication information, that the first AMP apparatus is not within an effective radiation range of the second AMP apparatus, the first AMP apparatus may not send a WPT setup request. Certainly, because the first AMP apparatus needs to determine whether the first AMP apparatus is within the effective radiation range of the second AMP apparatus, the first AMP apparatus needs to have a strong computational capability (for example, ranging). If the first AMP apparatus does not have the capability (for example, a type-A AMP STA may have the capability, and a type-B AMP STA and a type-C AMP STA may not have the capability), the first AMP apparatus may not determine whether the first AMP apparatus is within the effective radiation range of the second AMP apparatus, for example, directly send the WPT setup request.

For descriptions of the WPT setup procedure, refer to the following description. Details are not described herein.

In this embodiment of this application, the first AMP apparatus indicates the capability information of the first AMP apparatus to the second AMP apparatus, so that the second AMP apparatus can effectively determine, based on the capability information of the first AMP apparatus, whether to respond to the WPT setup procedure. This not only improves an interaction procedure in the AMP field, but also improves interaction efficiency.

The following describes five new types of frames in embodiments of this application.

The WPT setup phase, the WPT report phase, and the WPT teardown phase shown in the foregoing specific wireless power transfer process involve five new types of frames: a WPT setup request, a WPT setup response, a WPT report request, a WPT report, and WPT teardown.

To be compatible with an existing Wi-Fi protocol, the five new types of frames defined in embodiments of this application may be extended by using an action frame (action frame) in the existing Wi-Fi protocol. FIG. 11a shows an action field format of an action frame in an existing Wi-Fi protocol, including a category (category) field and an action details (action details) field. The category field indicates a category or a type to which the action frame belongs, and the action details field indicates a specific action name. Table 1 shows a specific definition of an action frame category field in the existing Wi-Fi protocol, where 0 to 127 are allocated, and 128 to 255 are unallocated.

**Table 1: Definition of an action frame category field in a Wi-Fi protocol**

| **Field value** | **Category** |
|---|---|
| 0 | Spectrum management (Spectrum Management) |
| 1 | QoS |
| 2 | Reserved value |
| ... | ... |
| 127 | Vendor-specific (Vendor-specific) |
| 128 to 255 | Unallocated |

Based on Table 1, in this embodiment of this application, a value, for example, 128, may be selected from 128 to 255 as an identifier of a WPT category frame in this embodiment of this application, indicating a WPT action frame, as shown in Table 2. A specific value of a WPT category field is not limited in embodiments of this application.

**Table 2: Value of a WPT action frame category field**

| **Field value** | **Category** |
|---|---|
| 128 | WPT |

In this embodiment of this application, the action details field is defined, and may also be referred to as a WPT action field, to distinguish between the five new types of frames that are defined above, as shown in FIG. 11b. In Table 3, a WPT action field is represented by 8 bits. A value 0 of the WPT action field represents a WPT setup request, 1 represents a WPT setup response, 2 represents a WPT report request, 3 represents a WPT report, 4 represents WPT teardown, and other values are reserved values. The foregoing description is merely an example. A specific quantity of bits used to represent the WPT action field and a sequence defined by the WPT action field are not limited in embodiments of this application. In addition, in a specific implementation, based on an actual scenario requirement, some new packets may be further defined in embodiments of this application. For example, in embodiments of this application, only 2 bits are used to represent the WPT action field, where 0 represents a WPT setup request, 1 represents a WPT setup response, 2 represents a WPT report, and 3 represents WPT teardown.

**Table 3: Definition of a WPT action field**

| **WPT action field** | **Description** |
|---|---|
| 0 | WPT setup request |
| 1 | WPT setup response |
| 2 | WPT report request |
| 3 | WPT report |
| 4 | WPT teardown |
| 5 to 255 | Reserved |

The following describes the WPT setup request and the WPT setup response in embodiments of this application.

### (1) WPT setup request

The WPT setup request includes at least one of the following fields: a category field, a WPT action field, a WPT setup parameter field, and a WPT status control field. The category field indicates that a category of the WPT setup request is WPT category information, the WPT action field indicates that a current action type is the WPT setup request, the WPT setup parameter field indicates a parameter used for setting up a WPT link, and the WPT status control field indicates whether the first AMP apparatus reports a direct current voltage output by a rectifier (DC voltage at the output of the rectifier), a voltage of an energy storage (energy storage device voltage), a received power (power received), and a temperature in the report phase.

For example, based on Table 2 and Table 3, in the WPT setup request, a value of the category field may be 128, and a value of the WPT action field may be 0.

The WPT setup parameter field may include at least one of the following fields: a WPT frequency range field, a WPT modulation field, and a WPT duration field, where the WPT frequency range field indicates a frequency range used in the WPT process, the WPT modulation field indicates a modulation scheme used in the WPT process, and the WPT duration field indicates a time length for which the WPT process lasts. As shown in FIG. 12a, the WPT frequency range field may be represented by 2 bytes, where a 1^{st} byte represents an operating class (operating class), and a 2^{nd} byte represents a channel number (channel number). For example, if a value of the operating class is 12 and a value of the channel number is 1, it indicates that a frequency range with a center frequency of 2412 MHz and a bandwidth of 20 MHz is used in the WPT process; or if a value of the operating class is 12 and a value of the channel number is 2, it indicates that a frequency range with a center frequency of 2417 MHz and a bandwidth of 20 MHz is used in the WPT process. The WPT frequency field may also be represented by 3 bytes, where first two bytes represent a start frequency, and a 3^{rd} byte represents a bandwidth. For example, if a value of the start frequency is 2417 and a value of the bandwidth is 20, it indicates that a frequency range with a start frequency of 2417 MHz and a bandwidth of 20 MHz is used in the WPT process. The WPT modulation field may use 3 bits in 1 byte to correspond to three different modulation schemes, and other bits are reserved. A corresponding bit of a selected modulation scheme is set to 1, and other bits are set to 0, indicating a modulation scheme used in the WPT process. For example, 3 bits in 1 byte respectively correspond to FMCW, DSSS, and FHSS modulation schemes, and a value of "010" indicates that the DSSS modulation scheme is used in the WPT process. The WPT duration field may use different values of 1 byte to indicate different durations. For example, 0 represents 0 seconds, 1 represents 1 second, ..., and 255 represents 255 seconds; or 0 represents 0 milliseconds, 1 represents 2 milliseconds, ..., and 255 represents 510 milliseconds. The foregoing description is merely an example. A sequence of the foregoing fields, a byte length, a value range, a value unit, and the like of each field are not limited in embodiments of this application.

The WPT status control field may be represented by 8 bits, as shown in FIG. 12b. In FIG. 12b, the WPT status control field is represented by 8 bits, where 4 bits indicate whether the first AMP apparatus reports the following four parameters: a direct current voltage output by a rectifier, a voltage of an energy storage, a received power, and a temperature. Each bit corresponds to one parameter. A value 0 of the bit indicates that the parameter is not reported, and 1 indicates that the parameter is reported. The WPT status control field may also be represented by 1 bit, where 0 indicates that the foregoing four parameters are reported, and 1 indicates that the foregoing four parameters are not reported. The foregoing description is merely an example. Embodiments of this application neither impose a limitation on a quantity of parameters, a sequence of the parameters, and specific parameters of the WPT status, nor impose a limitation on a quantity of bits representing the WPT status control field and whether the bits are in one-to-one correspondence with the parameters.

### (2) WPT setup response

The WPT setup response includes at least one of the following fields: a category field, a WPT action field, a status code field, a WPT setup parameter field, and a WPT status control field. The category field indicates that a category of the WPT setup response is WPT category information, the WPT action field indicates that a current action type is the WPT setup response, the status code field indicates whether a WPT link is successfully set up, and the WPT status control field indicates whether the first AMP apparatus needs to report a direct current voltage output by a rectifier, a voltage of an energy storage, a received power, and a temperature in the report phase.

For example, based on Table 2 and Table 3, in the WPT setup response, a value of the category field may be 128, and a value of the WPT action field may be 1.

An encoding status field may be extended by using a status code (status code) field in an existing Wi-Fi protocol. In the existing Wi-Fi protocol, the status code field indicates whether a request operation succeeds. Table 4 shows a specific definition of the status code field in the existing Wi-Fi protocol, where 0 to 129 are allocated, and 130 to 65535 are reserved values.

**Table 4: Definition of an encoding status field in a Wi-Fi protocol**

| **Status code value** | **Name** | **Description** |
|---|---|---|
| 0 | Success | Request succeeded |
| 1 | Rejection or unspecified rejection | Unspecified rejection |
| ... | ... | |
| 130 to 65535 | Reserved value | Reserved value |

In this embodiment of this application, a value 0 of the status code field may indicate that the WPT link is successfully set up; a newly defined value 130 indicates that the WPT link is successfully set up, and the WPT setup response carries a WPT status control field; and a newly defined value 131 indicates that the WPT link fails to be set up, as shown in Table 5. In this embodiment of this application, a value 0 of the status code field may further indicate that the WPT link is successfully set up, and the newly defined value 130 indicates that the WPT link fails to be set up, as shown in Table 6. The foregoing description is merely an example. A format of the status code field is not limited in embodiments of this application, provided that the status code field can indicate whether the WPT link is successfully set up.

**Table 5: Example 1 of a definition of an encoding status field in a WPT setup response**

| **Status code value** | **Name** | **Description** |
|---|---|---|
| 0 | Success | A WPT link is successfully set up |
| 130 | Success and carrying a WPT status control field | A WPT link is successfully set up and the WPT status control field is carried. |
| 131 | Failure | A WPT link fails to be set up |

**Table 6: Example 2 of a definition of an encoding status field in a WPT setup response**

| **Status code value** | **Name** | **Description** |
|---|---|---|
| 0 | Success | A WPT link is successfully set up |
| 130 | Failure | A WPT link fails to be set up |

A format of the WPT setup parameter field may be consistent with that of the WPT setup parameter field in the WPT setup request, as shown in FIG. 12a.

A format of the WPT status control field in the WPT setup response may be consistent with that of the WPT status control field in the WPT setup request, and a parameter that needs to be reported is a subset of the WPT status control field in the WPT setup request, as shown in FIG. 13. For example, in FIG. 13, the WPT setup request uses 4 bits to represent a WPT status control field, and each bit corresponds to one parameter. 1 indicates reporting, and 0 indicates not reporting. A value of the 4 bits of the WPT status control field in the WPT setup request is "1110", indicating that the first AMP apparatus reports a direct current voltage output by a rectifier, a voltage of an energy storage, and a received power. The WPT setup response also uses 4 bits to represent a WPT status control field, and a value of the WPT status control field is "1100", which is a subset of "1110" of the WPT status control field in the WPT setup request, indicating that the first AMP apparatus needs to report a direct current voltage output by a rectifier and a voltage of an energy storage. The foregoing description is merely an example. A specific format of the WPT status control field is not limited.

If the WPT link fails to be set up, it indicates that the second AMP apparatus cannot provide wireless power for the first AMP apparatus. If the WPT link is successfully set up, it indicates that the second AMP apparatus provides wireless power for the first AMP apparatus, and enters a WPT process.

The following describes the WPT report request and the WPT report in embodiments of this application.

### (3) WPT report request

The WPT report request includes at least one of the following fields: a category field, a WPT action field, and a WPT status control field. The category field indicates that a category of the WPT report request is WPT category information; the WPT action field indicates that a current action type is the WPT report request; and the WPT status control field indicates whether the first AMP apparatus needs to report a direct current voltage output by a rectifier, a voltage of an energy storage, a received power, and a temperature in the report phase.

For example, based on Table 2 and Table 3, in the WPT report request, a value of the category field may be 128, and a value of the WPT action field may be 2.

A format of the WPT status control field may be consistent with that of the WPT status control field in the WPT setup request, and a parameter that needs to be reported is a subset of the WPT status control field in the WPT setup request, as shown in FIG. 13. For example, in FIG. 13, the WPT setup request uses 4 bits to represent a WPT status control field, and each bit corresponds to one parameter. 1 indicates reporting, and 0 indicates not reporting. A value of the 4 bits of the WPT status control field in the WPT setup request is "1110", indicating that the first AMP apparatus reports a direct current voltage output by a rectifier, a voltage of an energy storage, and a received power. The WPT setup response also uses 4 bits to represent a WPT status control field, and a value of the WPT status control field is "1000", which is a subset of "1110" of the WPT status control field in the WPT setup request, indicating that the first AMP apparatus needs to report a direct current voltage output by a rectifier. The foregoing description is merely an example. A specific format of the WPT status control field is not limited in embodiments of this application.

### (4) WPT report

The WPT report includes at least one of the following fields: a category field, a WPT action field, a WPT power control field, a WPT status control field, and WPT status information. The category field indicates that a category of the WPT is WPT category information; the WPT action field indicates that a current action type is the WPT report; the WPT power control field indicates WPT power control information reported by the first AMP apparatus, where the WPT power control information includes at least one of the following information: urgency of power control information, a status of a received power, whether a voltage is excessively high, whether a current is excessively high, whether a temperature is excessively high, and whether there is a self-protection mechanism; the WPT status control field indicates whether the first AMP apparatus reports a direct current voltage output by a rectifier, a voltage of an energy storage, a received power, and a temperature in the report phase; and the WPT status information indicates WPT status information reported by the first AMP apparatus, where the WPT status information includes at least one of the following status information: a direct current voltage output by a rectifier, a voltage of an energy storage, a received power, and a temperature. The WPT status control information indicates information reported in the WPT status information.

For example, based on Table 2 and Table 3, in the WPT report, a value of the category field may be 128, and a value of the WPT action field may be 3.

For example, the WPT power control field may be represented by 8 bits, as shown in FIG. 14a. In FIG. 14a, the urgency of the power control information may be represented by 1 bit, where 0 indicates non-urgent, and 1 indicates non-urgent; the status of the received power may be represented by 3 bits, where 0 indicates that the received power does not reach a minimum receive power threshold of the first AMP apparatus, 1 indicates that the received power is between the minimum receive power threshold and a maximum receive power threshold, 2 indicates that the received power reaches the maximum receive power threshold, 3 indicates that the received power exceeds a first threshold of a maximum power, for example, 10% or 20%, 4 indicates that the received power exceeds a second threshold of the maximum power, for example, 30% or 50%, 5 indicates that a WPT alert is generated, 6 indicate that a WPT signal is no longer needed, for example, the first AMP apparatus is fully charged, and other values are reserved; whether the voltage is excessively high may be represented by 1 bit, where 0 indicates that a specified voltage threshold is not exceeded, and 1 indicates that a specified voltage threshold is exceeded; whether the current is excessively high may be represented by 1 bit, where 0 indicates that a specified current threshold is not exceeded, and 1 indicates that a specified current threshold is exceeded; whether the temperature is excessively high may be represented by 1 bit, where 0 indicates that a specified temperature threshold is not exceeded, and 1 indicates that a specified temperature threshold is exceeded; and whether there is a self-protection mechanism may be represented by 1 bit, where 0 indicates that there is no self-protection mechanism, and 1 indicates that there is a self-protection mechanism. The foregoing description is merely an example. A quantity of parameters included in the WPT power control field, a sequence of the parameters, and specific parameters are not limited in embodiments of this application.

A format of the WPT status control field may be consistent with that of the WPT status control field in the WPT setup request, as shown in FIG. 12b.

The WPT status information is specific WPT status information indicated by the WPT status control field. For example, as shown in FIG. 14b, the direct current voltage output by the rectifier may be represented by 8 bits, where 0 represents 0 mV, 1 represents 1 mV, 2 represents 2 mV, ..., and 255 represents 255 mV. The direct current voltage output by the rectifier may also be represented in another manner, and is still represented by 8 bits, where 0 represents 0 mV, 1 represents 2 mV, 2 represents 4 mV, ..., and 255 represents 510 mV. The voltage of the energy storage may be represented by 8 bits, where 0 represents 0 mV, 1 represents 1 mV, 2 represents 2 mV, ..., and 255 represents 255 mV. The voltage of the energy storage may also be represented in another manner, where 0 represents 3 mV, 1 represents 3 mV, 2 represents 6 mV, ..., and 255 represents 765 mV. The received power may be represented by 8 bits, where 0 represents 0 mW, 1 represents 1 mW, 2 represents 2 mW, ..., and 255 represents 255 mW. The received power may also be represented in another manner, and is still represented by 8 bits, where 0 represents 0 mW, 1 represents 4 mW, 2 represents 8 mW, ..., and 255 represents 1020 mW. The temperature may be represented by 8 bits, where 0 represents -20°C, 1 represents -19°C, 2 represents -18°C, ..., and 50 represents 30°C, and other values are reserved. The temperature may also be represented in another manner, where 0 represents -30°C, 1 represents -29°C, 2 represents -28°C, ..., and 90 represents 60°C, and other values are reserved. The foregoing parameter representation is merely an example. A quantity of parameters, a sequence of the parameters, and specific representation manners of the parameters are not limited in embodiments of this application.

When finding that a WPT alert is generated or a WPT signal is no longer needed, the first AMP apparatus sets the status of the received power in the WPT power control field in the WPT report to 5 or 6, indicating that a WPT alert is generated or WPT is no longer needed. In a specific implementation, if the first AMP apparatus cannot receive the WPT signal due to damage, or the received power far exceeds a maximum value of the maximum receive power, the first AMP apparatus may set the status of the received power in the WPT to 5, and send the status to the third AMP apparatus; and if the first AMP apparatus is fully charged or has completed a transmission task, and no longer needs the WPT signal, the first AMP apparatus may set the status of the received power in the WPT to 6, and send the status to the third AMP apparatus.

The following describes the WPT teardown in embodiments of this application.

### (5) WPT teardown

The WPT teardown includes at least one of the following fields: a category field and a WPT action field. The category field indicates that the WPT teardown is WPT category information, and the WPT action field indicates that a current action type is the WPT teardown.

For example, based on Table 2 and Table 3, in the WPT teardown, a value of the category field may be 128, and a value of the WPT action field may be 4.

In the WPT teardown phase, the first AMP apparatus receives the WPT teardown indicating that the second AMP apparatus is to stop a WPT process; and the first AMP apparatus sends an ACK to the third AMP apparatus, to indicate agreement to stop the WPT process.

In the WPT teardown phase, the third AMP apparatus receives the ACK indicating that the first AMP apparatus agrees to stop the WPT process, and the third AMP apparatus stops the WPT process.

The following describes a specific interaction procedure in this embodiment of this application based on the foregoing example topology and the five new types of frames. The WPT capability exchange phase is not involved in the interaction procedure shown below. For descriptions of the WPT capability exchange phase, refer to the foregoing descriptions. Details are not described herein again.

FIG. 5a to FIG. 5d are used as examples. First, in the WPT setup phase, the first AMP apparatus sends a WPT setup request to the third AMP apparatus to request to set up a WPT link, and the third AMP apparatus feeds back a WPT setup response to the first AMP apparatus, to indicate whether the WPT link is successfully set up. If the WPT link fails to be set up, it indicates that the second AMP apparatus cannot provide wireless power transfer for the first AMP apparatus, that is, cannot provide a WPT signal used for RF energy harvesting. If the WPT link is successfully set up, a WPT process is entered. For example, the second AMP apparatus may send a WPT signal to the first AMP apparatus, and the first AMP apparatus may harvest RF energy based on the WPT signal. In the WPT report phase, the first AMP apparatus may actively or passively report WPT status information to the third AMP apparatus. For example, the third AMP apparatus may send a WPT report request to the first AMP apparatus, to request the first AMP apparatus to report the WPT status information, and the first AMP apparatus feeds back a WPT report, to report the WPT status information. This is a passive report manner. For another example, the first AMP apparatus may actively send a WPT report to the third AMP apparatus to report WPT status information, especially when the first AMP apparatus generates a WPT alert or no longer needs a WPT signal. Based on the reported WPT status information, when finding that the first AMP apparatus generates a WPT alert or no longer needs a WPT signal, the third AMP apparatus may enter the WPT teardown phase. In the WPT teardown phase, the third AMP apparatus may implicitly or explicitly stop the WPT process. When the WPT report received by the third AMP apparatus indicates that a WPT alert is generated or a WPT signal is no longer needed, the third AMP apparatus may trigger (or control) the second AMP apparatus to directly stop the WPT process. This is an implicit manner. In an explicit manner, when determining, based on the received WPT report, that the first AMP apparatus generates a WPT alert or no longer needs a WPT signal, the third AMP apparatus sends WPT teardown to indicate that the WPT process is to be stopped; the first AMP apparatus feeds back an ACK to indicate that the WPT teardown is successfully received; and the third AMP apparatus triggers (or controls) the second AMP apparatus to stop the WPT process, that is, stops sending a WPT signal to the first AMP apparatus.

The foregoing specific process of wireless power transfer is merely an example. In a specific implementation, there may be another interaction process, for example, a WPT capability exchange phase, or there may be no explicit WPT report phase or WPT teardown phase. This is not limited in embodiments of this application. Any interaction procedure applicable to the foregoing phases shall fall within the protection scope of embodiments of this application.

Based on the topology structure shown in FIG. 3b, the AMP STA is a first AMP apparatus, and the AMP AP is a second AMP apparatus. The AMP AP can provide wireless power for the AMP STA, and also perform AMP communication with the AMP STA. A specific procedure of wireless power transfer is shown in FIG. 5b.

As an initiator of WPT setup, the AMP STA sends a WPT setup request to the AMP AP to request to set up a WPT link.

The WPT setup request includes at least one of the following fields: a category field, a WPT action field, and a WPT status control field. The category field indicates that a category of the WPT setup request is WPT category information, the WPT action field indicates that a current action type is the WPT setup request, and the WPT status control field indicates whether the AMP STA reports a direct current voltage output by a rectifier (DC Voltage at the output of the rectifier), a voltage of an energy storage (Energy Storage Device Voltage), a received power (Power received), and a temperature in the report phase. For setting of the category field, refer to Table 2. For setting of the WPT action type field, refer to Table 3. For setting of the WPT status control field, refer to FIG. 12b.

The AMP AP receives a WPT setup request, and feeds back a WPT setup response to the AMP STA, to indicate whether a WPT link is successfully set up. If the WPT setup fails, it indicates that the AMP AP cannot provide wireless power for the AMP STA. If the WPT setup succeeds, a WPT process is entered. The WPT process may be a process in which the AMP AP transmits a WPT signal to the AMP STA.

The WPT setup response includes at least one of the following fields: a category field, a WPT action field, a status code field, and a WPT status control field. The category field indicates that a category of the WPT setup response is WPT category information, the WPT action field indicates that a current action type is the WPT setup response, the status code field indicates whether a WPT link is successfully set up, and the WPT status control field indicates whether the AMP STA needs to report a direct current voltage output by a rectifier, a voltage of an energy storage, a received power, and a temperature in the report phase. For setting of the category field, refer to Table 2. For setting of the WPT action type field, refer to Table 3. For setting of the status code field, refer to Table 5 or Table 6. For setting of the WPT status control field, refer to FIG. 13.

In the WPT report phase, the AMP AP may send a WPT report request to the AMP STA, to request the AMP STA to report WPT status information.

The WPT report request includes at least one of the following fields: a category field, a WPT action field, and a WPT status control field. The category field indicates that a category of the WPT report request is WPT category information; the WPT action field indicates that a current action type is the WPT report request; and the WPT status control field indicates whether the AMP STA needs to report a direct current voltage output by a rectifier, a voltage of an energy storage, a received power, and a temperature in the report phase. For setting of the category field, refer to Table 2. For setting of the WPT action type field, refer to Table 3. For setting of the WPT status control field, refer to FIG. 13.

The AMP STA receives a WPT report request, sends a WPT report to the AMP AP, and reports WPT status information.

The WPT report request includes at least one of the following fields: a category field, a WPT action field, a WPT power control field, a WPT status control field, and WPT status information. The category field indicates that a category of the WPT is WPT category information; the WPT action field indicates that a current action type is the WPT report; the WPT power control field indicates WPT power control information reported by the AMP STA, where the WPT power control information includes at least one of the following information: urgency of power control information, a status of a received power, whether a voltage is excessively high, whether a current is excessively high, whether a temperature is excessively high, and whether there is a self-protection mechanism; the WPT status control field indicates whether the AMP STA reports a direct current voltage output by a rectifier, a voltage of an energy storage, a received power, and a temperature in the report phase; and the WPT status information indicates WPT status information reported by the AMP STA, where the WPT status information includes at least one of the following status information: a direct current voltage output by a rectifier, a voltage of an energy storage, a received power, and a temperature. The WPT status control information indicates information reported in the WPT status information. For setting of the category field, refer to Table 2. For setting of the WPT action type field, refer to Table 3. For setting of the WPT power control field, refer to FIG. 14a. For setting of the WPT status control field, refer to FIG. 13. For setting of the WPT status information, refer to FIG. 14b.

The foregoing description is passive reporting of the AMP STA, and the AMP STA may further perform active reporting, and actively send a WPT report to the AMP AP. Especially when the AMP STA generates a WPT alert or no longer needs a WPT signal, the status of the received power in the WPT power control field in the WPT report is set to 5 or 6, indicating that a WPT alert is generated or a WPT signal is no longer needed.

The AMP AP receives the WPT report, and when the WPT report indicates that the AMP STA generates a WPT alert or no longer needs a WPT signal, the AMP AP stops the WPT process of the AMP STA.

The foregoing description is an implicit process of the WPT teardown, and the AMP AP may further perform an explicit WPT teardown process. The AMP AP determines, based on the received WPT report, that the AMP STA no longer needs a WPT signal. For example, the AMP STA is about to be fully charged or has completed a transmission task, and sends WPT teardown to the AMP STA, to indicate that the AMP AP is to stop a WPT process.

The WPT teardown includes at least one of the following fields: a category field and a WPT action field. The category field indicates that the WPT teardown is WPT category information, and the WPT action field indicates that a current action type is the WPT teardown. For setting of the category field, refer to Table 2. For setting of the WPT action type field, refer to Table 3.

The AMP STA receives the WPT teardown indicating that the AMP AP is to stop a WPT process; and the AMP STA sends an ACK to the AMP AP, to indicate agreement to stop the WPT process.

The AMP AP receives the ACK indicating that the AMP STA agrees to stop the WPT process, and the AMP AP stops the WPT process.

Based on the topology structure shown in FIG. 4b, the AMP STA is a first AMP apparatus, the AMP AP is a third AMP apparatus, and the energizer is a second AMP apparatus. The AMP AP performs AMP communication with the AMP STA, and the energizer provides RF energy for the AMP STA.

An AMP communication process between the AMP STA and the AMP AP is the same as the procedure shown in FIG. 5b, and a difference lies in starting and stopping a WPT process, as shown in FIG. 5d.

After the AMP AP sends a WPT setup response to indicate that a WPT link is successfully set up, the AMP AP sends WPT control (control information #1 shown in FIG. 5d) to the energizer, to indicate to start the WPT process. The energizer receives the WPT control, starts to provide RF energy for the AMP STA, and enters the WPT process.

When the AMP AP receives a WPT report indicating that a WPT alert is generated or a WPT signal is no longer needed, or receives an ACK indicating that the AMP STA has received an indication of stopping the WPT process, the AMP AP sends WPT control (control information #2 shown in FIG. 5d) to the energizer, to indicate to stop the WPT process. The energizer receives the WPT control and stops providing RF energy for the AMP STA.

Based on the topology structure shown in FIG. 3c, the AMP STA is a first AMP apparatus, and the relay node is a second AMP apparatus. The relay node can provide RF energy for the AMP STA, and also perform AMP communication with the AMP STA. A specific procedure of wireless power transfer is shown in FIG. 5b.

The following describes AMP apparatuses provided in embodiments of this application.

In this application, the AMP apparatus is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, division into the modules is an example and is merely logical function division, and may be other division in an actual implementation. The following describes in detail AMP apparatuses in embodiments of this application with reference to FIG. 15 to FIG. 17.

FIG. 15 is a diagram of a structure of an AMP apparatus according to an embodiment of this application. As shown in FIG. 15, the AMP apparatus includes a processing module 1501 and a transceiver module 1502. The transceiver module 1502 may implement a corresponding communication function, and the processing module 1501 is configured to implement a corresponding processing function. For example, the transceiver module 1502 may also be referred to as an interface, a communication interface, or a communication module.

In some embodiments of this application, the AMP apparatus may be configured to perform an action performed by the first AMP apparatus in the foregoing method embodiments. In this case, the first AMP apparatus may be a WLAN device, or a chip, a functional module, or the like that can be configured in the device. The transceiver module 1502 is configured to perform a receiving/sending-related operation of the first AMP apparatus in the foregoing method embodiments, and the processing module 1501 is configured to perform a processing-related operation of the first AMP apparatus in the foregoing method embodiments.

For example, the processing module 1501 may be configured to obtain first capability indication information; the transceiver module 1502 may be configured to: send or output the first capability indication information through a WLAN link; and the processing module 1501 may be further configured to initiate a WPT setup procedure based on the first capability indication information.

For example, the transceiver module 1502 may be further configured to: receive or input second capability indication information; and the processing module 1501 may be further configured to parse the second capability indication information.

For example, the processing module 1501 may be further configured to obtain a WPT setup request; and the transceiver module 1502 may be further configured to: send or output the WPT setup request, and receive or input a WPT setup response through the WLAN link.

For example, the processing module 1501 may be further configured to obtain a WPT report; and the transceiver module 1502 may be further configured to: send or output a WPT link through a WLAN link.

For example, the transceiver module 1502 may be further configured to: receive or input a WPT report request.

For example, the transceiver module 1502 may be further configured to: receive or input WPT teardown through a WLAN link; and the processing module 1501 may further parse the WPT teardown.

For example, the processing module 1501 may include a generation module or a parsing module. For example, the generation module may be configured to generate each piece of information shown above, and the parsing module may be configured to parse each piece of information received by the first AMP apparatus. For example, the transceiver module 1502 may include a radio frequency module and an antenna module. For example, the transceiver module 1502 may include a pin module.

Still refer to FIG. 15. In some other embodiments of this application, the AMP apparatus may be configured to perform an action performed by the third AMP apparatus in the foregoing method embodiments. In this case, the AMP apparatus may be a WLAN device, or a chip, a functional module, or the like that can be configured in the device. The transceiver module 1502 is configured to perform a receiving/sending-related operation of the third AMP apparatus in the foregoing method embodiments, and the processing module 1501 is configured to perform a processing-related operation of the third AMP in the foregoing method embodiments.

For example, the transceiver module 1502 may be configured to: receive or input first capability indication information through a WLAN link; and the processing module 1501 may be configured to respond to a WPT setup procedure based on the first capability indication information.

For example, the transceiver module 1502 may be configured to: send or output second capability indication information through a WLAN link.

For example, the transceiver module 1502 may be configured to: receive or input a WPT setup request, and send or output a WPT setup response through a WLAN link.

For example, the transceiver module 1502 may be further configured to: receive or input a WPT report through a WLAN link.

For example, the transceiver module 1502 may be further configured to: send or output a WPT report request through a WLAN link.

For example, the transceiver module 1502 may be further configured to: send or output WPT teardown through a WLAN link.

For example, the processing module 1501 may include a generation module and a parsing module. For example, the generation module may be configured to generate each piece of information shown above, and the parsing module may be configured to parse each piece of information received by the third AMP apparatus. For example, the transceiver module 1502 may include a radio frequency module and an antenna module. For example, the transceiver module 1502 may include a pin module.

Optionally, in the foregoing embodiments, the AMP apparatus may further include a storage module. The storage module may be configured to store instructions and/or data, and the processing module 1501 may read the instructions and/or the data in the storage module, to enable the AMP apparatus to implement the foregoing method embodiments.

In the foregoing embodiments, for detailed descriptions of terms or steps such as the first capability indication information, the second capability indication information, the WLAN link, the WPT link, the first AMP apparatus, the third AMP apparatus, the WPT setup request, the WPT setup response, the WPT report request, the WPT report, or the WPT teardown, refer to the descriptions in the foregoing method embodiments. Details are not described herein again.

Specific descriptions of the transceiver module and the processing module shown in the foregoing embodiments are merely examples. For specific functions, steps, or the like performed by the transceiver module and the processing module, refer to the foregoing method embodiments. Details are not described herein again.

The foregoing describes the AMP apparatus in embodiments of this application. The following describes a possible product form of the AMP apparatus. Any form of product that has a function of the AMP apparatus in FIG. 15 falls within the protection scope of embodiments of this application. The following description is merely an example, and does not limit the product form of the AMP apparatus in embodiments of this application.

The AMP apparatus shown in embodiments of this application may be a main body of the AMP apparatus, a communication module in the AMP apparatus, or a circuit or a chip (for example, a modem (Modem) chip, also referred to as a baseband (baseband) chip, a system on chip (system on chip, SoC) chip including a modem core, or a system in package (system in package, SIP) chip) in the AMP apparatus. For example, when the AMP apparatus is configured to perform actions performed by the first AMP apparatus, the AMP apparatus may be the entirety shown in FIG. 1, or a part such as the Wi-Fi subsystem shown in FIG. 1. For description of the first AMP apparatus, refer to FIG. 1. Details are not described herein again.

In a possible implementation, in the AMP apparatus shown in FIG. 15, the processing module 1501 may be one or more processors, and the transceiver module 1502 may be a transceiver. Alternatively, the transceiver module 1502 may be a sending module and a receiving module. The sending module may be a transmitter, and the receiving module may be a receiver. The sending module and the receiving module are integrated into one component, for example, a transceiver. In embodiments of this application, the processor and the transceiver may be coupled, or the like. A manner of connecting the processor and the transceiver is not limited in embodiments of this application.

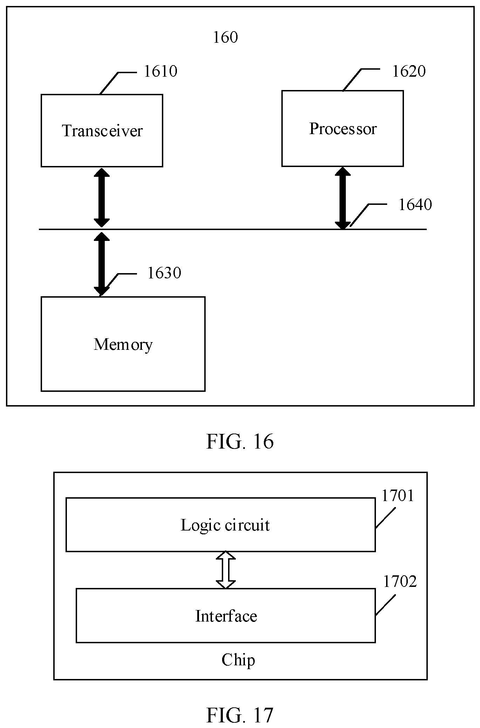

FIG. 16 is a diagram of a structure of an AMP apparatus according to an embodiment of this application. As shown in FIG. 16, the AMP apparatus 160 includes one or more processors 1620 and a transceiver 1610.

In some embodiments of this application, the AMP apparatus may be configured to perform a step, a method, or a function performed by the first AMP apparatus. For example, the processor 1620 may be configured to perform a function or a step implemented by the processing module 1501 shown in FIG. 15, and the transceiver 1610 may be configured to perform a function or a step implemented by the transceiver module 1502 shown in FIG. 15. For specific descriptions of the processor 1620 and the transceiver 1610, refer to FIG. 15 or the method embodiments shown above. Details are not described herein again. With reference to FIG. 1, the processor shown herein may include a baseband circuit or a radio frequency circuit in the Wi-Fi subsystem shown in FIG. 1; and the transceiver may include an antenna in the Wi-Fi subsystem shown in FIG. 1.

In some other embodiments of this application, the AMP apparatus is configured to perform a step, a method, or a function performed by the third AMP apparatus. For example, the processor 1620 may be configured to perform a function or a step implemented by the processing module 1501 shown in FIG. 15, and the transceiver 1610 may be configured to perform a function or a step implemented by the transceiver module 1502 shown in FIG. 15. For specific descriptions of the processor 1620 and the transceiver 1610, refer to FIG. 15 or the method embodiments shown above. Details are not described herein again.

For example, a processing capability of a processor of the first AMP apparatus may be lower than a processing capability of a processor of the third AMP apparatus. For description of the processor, refer to FIG. 1. Details are not described herein again.

In various implementations of the AMP apparatus shown in FIG. 16, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the AMP apparatus 160 may further include one or more memories 1630, configured to store program instructions and/or data. The memory 1630 is coupled to the processor 1620. The coupling in this embodiment of this application may be an indirect coupling or a communication connection between AMP apparatuses, units, or modules in an electrical form, a mechanical form, or another form, and is used for information exchange between the AMP apparatuses, the units, or the modules. The processor 1620 may operate in cooperation with the memory 1630. The processor 1620 may execute the program instructions stored in the memory 1630. Optionally, at least one of the one or more memories may be included in the processor.

A specific connection medium between the transceiver 1610, the processor 1620, and the memory 1630 is not limited in this embodiment of this application. In this embodiment of this application, the memory 1630, the processor 1620, and the transceiver 1610 are connected through a bus 1640 in FIG. 16. The bus is represented by using a thick line in FIG. 16. A manner of connecting other components is merely an example for description, and is not limited thereto. The bus may be classified into an address bus, a data bus, a control bus, and the like. For ease of representation, only one thick line is for representing the bus in FIG. 16, but this does not mean that there is only one bus or only one type of bus.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the AMP apparatus shown in this application), but is not limited thereto. The memory in embodiments of this application may alternatively be a circuit or any other apparatus that can implement a storage function, and is configured to store the program instructions and/or the data.

The processor 1620 is mainly configured to: process a Wi-Fi protocol and communication data, control the entire AMP apparatus, execute a software program, and process data of the software program. The memory 1630 is mainly configured to store the software program and the data. The transceiver 1610 may include a control circuit and an antenna. The control circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, such as a touchscreen, a display, or a keyboard, is mainly configured to: receive data input by a user and output data to the user.

The AMP apparatus shown in this embodiment of this application may alternatively have more components or the like than those in FIG. 16. This is not limited in embodiments of this application. The methods performed by the processor and the transceiver are merely examples. For specific steps performed by the processor and the transceiver, refer to the methods described above.

In another possible implementation, in the AMP apparatus shown in FIG. 15, the processing module 1501 may be one or more logic circuits, and the transceiver module 1502 may be an input/output interface, or may be referred to as a communication interface, an interface circuit, an interface, or the like. Alternatively, the transceiver module 1502 may be a sending module and a receiving module. The sending module may be an output interface, and the receiving module may be an input interface. The sending module and the receiving module are integrated into one module, for example, an input/output interface. As shown in FIG. 17, the AMP apparatus shown in FIG. 17 includes a logic circuit 1701 and an interface 1702. In other words, the processing module 1501 may be implemented by the logic circuit 1701, and the transceiver module 1502 may be implemented by the interface 1702. The logic circuit 1701 may be a chip, a processing circuit, an integrated circuit, a system on chip (system on chip, SoC), or the like. The interface 1702 may be a communication interface, an input/output interface, a pin, or the like. For example, FIG. 17 shows an example in which the AMP apparatus is a chip. The chip includes the logic circuit 1701 and the interface 1702.

In this embodiment of this application, the logic circuit and the interface may be further coupled to each other. A specific manner of connecting the logical circuit and the interface is not limited in this embodiment of this application. For example, the logic circuit 1701 may be configured to perform a function or a step implemented by the processing module 1501 shown in FIG. 15, and the interface 1702 may be configured to perform a function or a step implemented by the transceiver module 1502 shown in FIG. 15. For specific descriptions of the logic circuit 1701 and the interface 1702, refer to FIG. 15 or the method embodiments shown above. Details are not described herein again.

The AMP apparatus shown in embodiments of this application may implement the methods provided in embodiments of this application in a form of hardware, or may implement the methods provided in embodiments of this application in a form of software. This is not limited in embodiments of this application.

An embodiment of this application further provides a communication system. The communication system includes a first AMP apparatus and a third AMP apparatus. The first AMP apparatus and the third AMP apparatus may be configured to perform the method in any one of the foregoing embodiments. Optionally, the communication system may further include a second AMP apparatus.

This application further provides a computer program. The computer program is configured to implement operations and/or processing performed by the AMP apparatuses in the methods provided in this application.

This application further provides a computer-readable storage medium. The computer-readable storage medium stores computer code. When the computer code is run on a computer, the computer is enabled to perform operations and/or processing performed by the AMP apparatuses in the methods provided in this application.

This application further provides a computer program product. The computer program product includes computer code or a computer program. When the computer code or the computer program runs on a computer, operations and/or processing performed by the AMP apparatuses in the methods provided in this application are/is performed.

In the several embodiments provided in this application, it should be understood that the disclosed system, AMP apparatus, and method may be implemented in other manners. For example, the AMP apparatus embodiments described above are merely examples. For example, division into modules is merely logical function division, and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and parts displayed as modules may or may not be physical modules, and may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless power transfer method, wherein the method is applied to a first ambient power AMP apparatus, and the method comprises:
sending first capability indication information through a wireless local area network WLAN link, wherein the first capability indication information indicates capability information of receiving a wireless power transfer WPT signal by the first AMP apparatus; and
initiating a WPT setup procedure based on the first capability indication information.

2. The method according to claim 1, wherein the method further comprises:
receiving second capability indication information through the WLAN link, wherein the second capability indication information indicates capability information of sending the WPT signal by a second AMP apparatus.

3. The method according to claim 2, wherein the initiating the WPT setup procedure based on the first capability indication information comprises:
initiating the WPT setup procedure when the first capability indication information matches the second capability indication information.

4. The method according to any one of claims 1 to 3, wherein the first capability indication information comprises at least one of the following:
a frequency band supported by the first AMP apparatus, a bandwidth supported by the first AMP apparatus, or a WPT waveform supported by the first AMP apparatus.

5. The method according to claim 4, wherein the first capability indication information further comprises at least one of the following:
a receive power sensitivity of the first AMP apparatus or a type of the first AMP apparatus.

6. The method according to claim 5, wherein the first capability indication information further comprises at least one of the following:
an antenna type of the first AMP apparatus or an antenna polarization manner of the first AMP apparatus.

7. The method according to any one of claims 2 to 6, wherein the second capability indication information comprises at least one of the following:
a frequency band supported by the second AMP apparatus, a bandwidth supported by the second AMP apparatus, or a WPT waveform supported by the second AMP apparatus.

8. The method according to claim 7, wherein the second capability indication information further comprises at least one of the following:
whether an effective isotropic radiated power EIRP of the second AMP apparatus is adjustable or an EIRP of the second AMP apparatus.

9. The method according to claim 8, wherein the second capability indication information further comprises at least one of the following:
an antenna type of the second AMP apparatus or an antenna polarization manner of the second AMP apparatus.

10. The method according to claim 9, wherein the second capability indication information further comprises at least one of the following:
an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

11. The method according to any one of claims 1 to 10, wherein initiating the WPT setup procedure comprises:
sending a WPT setup request through the WLAN link, wherein the WPT setup request is used to request to set up a WPT link; and
receiving a WPT setup response of the WPT setup request through the WLAN link, wherein the WPT setup response indicates whether the WPT link is successfully set up.

12. The method according to any one of claims 1 to 11, wherein the method further comprises:
sending a WPT report through the WLAN link, wherein the WPT report indicates WPT status information.

13. The method according to claim 12, wherein before the sending the WPT report, the method further comprises:
receiving a WPT report request through the WLAN link, wherein the WPT report request is used to request the WPT report.

14. The method according to claim 12 or 13, wherein the sending the WPT report comprises:
sending the WPT report when the first AMP apparatus generates a WPT alert or no longer needs a WPT signal, wherein the WPT report indicates that the first AMP apparatus generates a WPT alert or no longer needs a WPT signal.

15. The method according to any one of claims 1 to 14, wherein the method further comprises:
receiving WPT teardown through the WLAN link, wherein the WPT teardown indicates to tear down a WPT procedure.

16. A wireless power transfer method, wherein the method is applied to a third ambient power AMP apparatus, and the method comprises:
receiving first capability indication information through a wireless local area network WLAN link, wherein the first capability indication information indicates capability information of receiving a wireless power transfer WPT signal by the first AMP apparatus; and
responding to a WPT setup procedure based on the first capability indication information.

17. The method according to claim 16, wherein the method further comprises:
sending second capability indication information through the WLAN link, wherein the second capability indication information indicates capability information of sending the WPT signal by the second AMP apparatus.

18. The method according to claim 17, wherein the responding to the WPT setup procedure based on the first capability indication information comprises:
responding to the WPT setup procedure when the first capability indication information matches the second capability indication information.

19. The method according to any one of claims 15 to 18, wherein the first capability indication information comprises at least one of the following:
a frequency band supported by the first AMP apparatus, a bandwidth supported by the first AMP apparatus, or a WPT waveform supported by the first AMP apparatus.

20. The method according to claim 19, wherein the first capability indication information further comprises at least one of the following:
a receive power sensitivity of the first AMP apparatus or a type of the first AMP apparatus.

21. The method according to claim 20, wherein the first capability indication information further comprises at least one of the following:
an antenna type of the first AMP apparatus or an antenna polarization manner of the first AMP apparatus.

22. The method according to any one of claims 17 to 21, wherein the second capability indication information comprises at least one of the following:
a frequency band supported by the second AMP apparatus, a bandwidth supported by the second AMP apparatus, or a WPT waveform supported by the second AMP apparatus.

23. The method according to claim 22, wherein the second capability indication information further comprises at least one of the following:
whether an effective isotropic radiated power EIRP of the second AMP apparatus is adjustable or an EIRP of the second AMP apparatus.

24. The method according to claim 23, wherein the second capability indication information further comprises at least one of the following:
an antenna type of the second AMP apparatus or an antenna polarization manner of the second AMP apparatus.

25. The method according to claim 24, wherein the second capability indication information further comprises at least one of the following:
an antenna azimuth of the second AMP apparatus, an antenna elevation of the second AMP apparatus, whether a beam pattern of the second AMP apparatus is adjustable, a beam pattern width of the second AMP apparatus, or a beam pattern height of the second AMP apparatus.

26. The method according to any one of claims 16 to 25, wherein the responding to the WPT setup procedure comprises:
receiving a WPT setup request through the WLAN link, wherein the WPT setup request is used to request to set up a WPT link; and
sending a WPT setup response of the WPT setup request through the WLAN link, wherein the WPT setup response indicates whether the WPT link is successfully set up.

27. The method according to any one of claims 16 to 26, wherein the method further comprises:
receiving a WPT report through the WLAN link, wherein the WPT report indicates WPT status information.

28. The method according to claim 27, wherein before the receiving the WPT report, the method further comprises:
sending a WPT report request through the WLAN link, wherein the WPT report request is used to request the WPT report.

29. The method according to any one of claims 16 to 28, wherein the method further comprises:
sending WPT teardown through the WLAN link, wherein the WPT teardown indicates to tear down a WPT procedure.

30. An ambient power AMP apparatus, comprising a module configured to perform the method according to any one of claims 1 to 29.

31. An ambient power AMP apparatus, comprising a processor, wherein the processor is configured to perform the method according to any one of claims 1 to 29.

32. An ambient power AMP apparatus, comprising a logic circuit and an interface, wherein the logic circuit is coupled to the interface; and
the interface is configured to: input and/or output information, and the logic circuit is configured to perform the method according to any one of claims 1 to 15, or the logic circuit is configured to perform the method according to any one of claims 16 to 29.

33. A computer-readable storage medium, wherein the computer-readable storage medium is configured to store a computer program, and when the computer program is executed, the method according to any one of claims 1 to 29 is performed.

34. A computer program product, wherein when the computer program product is executed, the method according to any one of claims 1 to 29 is performed.

35. A communication system, wherein the communication system comprises a first ambient power AMP apparatus and a third AMP apparatus, the first AMP apparatus is configured to perform the method according to any one of claims 1 to 15, and the third AMP apparatus is configured to perform the method according to any one of claims 16 to 29.
